# EUROPÄISCHE PATENTSCHRIFT

(11) **EP 2 802 401 B1**
(45) Veröffentlichungstag und Bekanntmachung des Hinweises auf die Patenterteilung: **18.12.2019**
(21) Anmeldenummer: 13700555.9
(22) Anmeldetag: 14.01.2013
(51) Int. Cl.: B01D 46/10, B01D 46/52

(54) **LUFTFILTERELEMENT MIT HALTEGEOMETRIE**
AIR FILTER ELEMENT HAVING A SPECIFIC RETAINING GEOMETRY
ELÉMENT FILTRANT À GÉOMÉTRIE DE RETENUE DESTINÉ À UN FILTRE À AIR

(30) Priorität: 13.01.2012 DE 102012000467
(43) Veröffentlichungstag der Anmeldung: 19.11.2014
(73) Patentinhaber: MANN+HUMMEL GmbH, 71636 Ludwigsburg (DE)
(72) Erfinder: RIEGER, Mario, 71638 Ludwigsburg (DE); BLOSSEY, Werner, 71726 Benningen (DE); NEEF, Pascal, 71229 Leonberg (DE); MBADINGA-MOUANDA, Gelase, 74321 Bietigheim-Bissingen (DE); EPLI, Sven, 74078 Heilbronn (DE); SCHULZ, Franziska, 67105 Schifferstadt (DE); SCHMID, Martin, 94419 Reisbach (DE); SCHWINGHAMMER, Alfons-Alois, 84130 Dingolfing (DE); KRIEGER, Joachim-Paul, 94419 Reisbach (DE); KOLMEDER, Michael, 84130 Dingolfing (DE)
(86) Internationale Anmeldenummer: PCT/EP2013/050578
(87) Internationale Veröffentlichungsnummer: WO 2013/104791

(56) Entgegenhaltungen:
- DE-A1-102009 009 066
- DE-U1-202006 020 287
- FR-A1- 2 822 082
- US-A1- 2007 209 517
- US-A1- 2010 258 493

## Beschreibung

### Gebiet der Erfindung

Die vorliegende Erfindung betrifft ein Filterelement, insbesondere ein Luftfilterelement, beispielsweise zur Luftfitration in einem Kraftfahrzeug, einer Land- oder Baumaschine, mit einer Haltegeometrie, die eine sichere und platzsparende Anordnung eines Filterelementes in einem Luftfiltergehäuse erlaubt.

### Hintergrund der Erfindung

Luftfilter bestehen in der Regel aus einem Luftfiltergehäuse und einem auswechselbaren Filterelement. Das Filterelement kann ausgewechselt werden, wenn es nach einer bestimmten Betriebszeit staubbeladen ist und die Filterleistung nachlässt, Der Austausch des Filterelementes erfolgt in der Regel seitens des Betreibers. Um eine optimale Filterwirkung zu erreichen ist es notwendig, dass die Filterelemente in dem Luftfiltergehäuse zuverlässig und positionsgenau angeordnet werden, um auf diese Weise zum einen eine optimale Strömungsgeometrie zu ermöglichen, und ferner eine zuverlässige Abdichtung zwischen einer Rohluftseite und einer Reinluftseite zu erhalten. Da der Austausch oft durch weniger qualifiziertes Personal erfolgen muss, ist eine Ausgestaltung des Filterelementes und des Filtergehäuses notwendig, die eine Fehlplatzierung im Wesentlichen vermeidet, Zu diesem Zweck sind Filterelemente mit Haltevorrichtungen versehen, die es ermöglichen, das Filterelement innerhalb des Luftfiltergehäuses einzusetzen und zu positionieren, so dass ein zuverlässiger Betrieb des Luftfilters ermöglicht wird. Derartige Filterelemente sind beispielsweise bekannt aus WO 2010/099317, Dort wird ein Filterelement beschrieben, welches in ein Luftfiltergehäuse eingesetzt werden kann.

Aus der US 2007/209517 A1 ist ein Filterelement bekannt, das zur Montage in ein Gehäuse zunächst in eine Schublade einsetzbar ist, wobei die Schublade eine Führungsfläche aufweist, die dazu vorgesehen ist, mit einem beinförmigen Abstützabschnitt eines Rahmens des Filterelements wechselzuwirken; diese Führungsfläche verläuft geneigt, sodass das Filterelement beim Einführen der Schublade einseitig angepresst wird. Auf dem umlaufenden Rahmen des Filterelements ist ferner eine befestigt, die eine Dichtlippe hat, die mit ihrer Kontaktfläche dichtend auf einem gehäuseseitigen Bauteil anliegt.

Aus der DE 20 2006 020287 U1 ist ein Filterelement bekannt, das an Einbauräume mit beliebigen Geometrien anpassbar sein soll. Hierzu weist es einen tiefgezogenen dünnwandigen Rahmen auf, in den das gefaltete Filtermedium eingeklebt ist. Der dünnwandige Rahmen wird durch eine umlaufende Wand, die in einem rechten Winkel zur Filterebene ausgerichtet ist, begrenzt, deren Außenkontur mit mehreren Ausbuchtungen versehen ist, wobei die Ausbuchtungen korrespondierend mit dem Gehäuse ausgebildet sind. Auf die umlaufende Wand ist eine radial wirkende Schaumdichtung aufgeklebt.

Aus der FR 2 822 082 A1 ist ein Filterelement bekannt, das über eine umlaufende an einen Filtermediumkörper angeschäumte Dichtung verfügt, die zumindest teilweise auskragende Dichtungsabschnitte aufweist, die zur Positionierung und Halterung des Filterelements im Gehäuse vorgesehen sind.

### Zusammenfassung der Erfindung

Es kann als eine Aufgabe der Erfindung betrachtet werden ein Filterelement, ein Luftfiltergehäuse und einen Luftfilter bereitzustellen, welche eine betriebssichere Positionierung eines Filterelementes in einem Luftfiltergehäuse erlauben.

Die Aufgabe der vorliegenden Erfindung wird gelöst durch den Gegenstand der unabhängigen Ansprüche, weitere Ausgestaltungen werden in den abhängigen Ansprüchen verkörpert.

Gemäß der Erfindung wird ein Luftfilterelement zum Einsetzen in ein Luftfiltergehäuse bereitgestellt, wobei das Luftfilterelement eine Anströmfläche, eine Abströmfläche, ein Filtermedium und eine Filterelementhaltevorrichtung bereitgestellt. Das Filtermedium erstreckt sich zwischen der Anströmfläche und der Abströmfläche in eine axiale Richtung des Luftfilterelementes, wobei die Filterelementhaltevorrichtung mit dem Filtermedium verbunden ist. Die Filterelementhaltevorrichtung weist eine von dem Filtermedium radial abstehende Halteanordnung sowie eine Dichtungsanordnung mit einer um das Filtermedium umlaufenden Dichtungslinie auf. Die radial abstehende Halteanordnung befindet sich zwischen der umlaufenden Dichtungslinie und dem Filtermedium.

Auf diese Weise kann das Luftfilterelement kompakt ausgestaltet werden, insbesondere, da außerhalb der Dichtungslinie keine weiteren Elemente mehr angeordnet werden müssen.

Gemäß einer beispielhaften Ausführungsform der Erfindung ist die Dichtungsanordnung mit durch ein Zusammenwirken mit z. B, einem Luftfiltergehäuse zur axialen und/oder radialen Abdichtung einer Rohseite (ungefilterte Luft) von einer Reinseite (gefilterte Luft) geeignet ist.

Erfindungsgemäß weist die Halteanordnung eine radial abstehende Ausbuchtung auf. Vorzugsweise weist die Halteanordnung mehrere radial abstehende Ausbuchtungen auf.

Gemäß einer beispielhaften Ausführungsform der Erfindung weist das Filtermedium zwischen der Anströmfläche und der Abströmfläche wenigstens eine Kante auf, an der eine erste Filtermediumseitenfläche und eine zweite Filtermediumseitenfläche aneinandergrenzen. Die Filterelementhaltevorrichtung weist an der Kante eine radiale Ausbuchtung auf, wobei die Dichtungsanordnung eine um das Filtermedium umlaufende Dichtungslinie aufweist. Die Dichtungslinie verläuft entlang der radialen Ausbuchtung, wobei vorzugsweise der Radius R2 entlang des Verlaufs der Dichtungslinie größer ist als der Radius R1 der Kante. In anderen Worten verläuft die Dichtungslinie über die radiale Ausbuchtung.

Auf diese Weise kann ein Dichtungsverlauf mit einem im Vergleich zum Kantenradius einer Gehäuseinnenkante großen Radius bereitgestellt werden. Dies erlaubt eine vereinfachte Aufbringung einer Dichtungsmasse, bzw. die Aufnahme eines Filterelementes, welches derart mit einer Dichtmasse versehen ist. Die radiale Ausbuchtung kann sich dabei im Wesentlichen nur über eine der Seitenflächen des Filtergehäuses erstrecken. Alternativ kann sich die radiale Ausbuchtung auch über zwei benachbarte Seitenflächen des Filtergehäuses hinaus erstrecken, insbesondere im gleichen Maß.

Ferner weist die Halteanordnung wenigstens eine Ausnehmung in axialer Richtung auf, wobei die Ausnehmung ausgelegt ist einen luftfiltergehäuseseitigen Vorsprung aufzunehmen. Statt Vorsprüngen am Gehäuse und Ausnehmungen am Filterelement können teilweise oder ganz auch Vorsprünge am Filterelement und Ausnehmungen am Filtergehäuse vorgesehen sein.

Auf diese Weise kann das Luftfilterelement in dem Luftfiltergehäuse genau positioniert werden. Insbesondere ermöglicht die Ausnehmung eine Kontrolle über ein ordnungsgemäßes Einsetzen des Filterelementes in das Gehäuse. Wenn die Ausnehmung des Luftfilterelementes mit dem Vorsprung des Gehäuses in Eingriff ist, so liegt eine korrekte Einbauposition vor. Wenn die Ausnehmung und der Vorsprung nicht in Eingriff sind kann dies unmittelbar erkennbar sein, sodass es auch ungeschultem Personal auffällt, dass keine korrekte Einbauposition vorliegt. Die Ausnehmung kann ein Durchgangsloch oder ein Sackloch sein. Das Loch kann einen kreisrunden Querschnitt aufweisen, jedoch auch einen ovalen, ellipsenförmigen oder eckigen Querschnitt.

Gemäß einer beispielhaften Ausführungsform der Erfindung verringert sich der Querschnitt der Ausnehmung zumindest teilweise in axialer Richtung. Insbesondere läuft die Ausnehmung in axiale Richtung wenigstens teilweise konisch zu. Auf diese Weise kann eine Zentrierung des Luftfilterelementes im Gehäuse vorgenommen werden. Ferner wird der Einbau erheblich vereinfacht, da die konische Form eine geringere Zielgenauigkeit beim Treffen von Vorsprung und Ausnehmung erfordert. Der konische Zulauf kann kegelförmig, kegelstumpfförmig oder auch pyramidenförmig bzw. pyramidenstumpfförmig sein. Der konische Zulauf ist jedoch nicht auf einen linearen Zulauf beschränkt, sondern kann auch einen gekrümmten Zulauf haben, etwa in Form eines Paraboloidstumpfes oder eines Ellipsoidstumpfes.

Gemäß einer beispielhaften Ausführungsform der Erfindung ist wenigstens eine der Ausnehmungen eine Langlochausnehmung ist. Auf diese Weise kann eine toleranzbehaftete Festlegung bezüglich einer Richtung erreicht werden. Dies ermöglicht einen Stoß- bzw, Schwingungsausgleich oder einen Temperaturausgleich. Weiterhin kann durch ein Langloch auch ein verzogenes Luftfiltergehäuse in einem gewissen Maß kompensiert werden. Die Kombination eines herkömmlichen Loches und eines Langloches erlaubt trotz Toleranz am Langloch eine positionsgenaue Festlegung an dem herkömmlichen Loch, Es kann auch die Kombination eines herkömmlichen Loches mit einem ersten Langloch und einem zweiten sich quer dazu erstreckenden Langloch vorgesehen sein. Die Mehrzahl von Löchern kann über verschiedene Stellen am Luftfilterelement verteilt sein.

Gemäß einer beispielhaften Ausführungsform der Erfindung weist die Halteanordnung eine Mehrzahl von Ausnehmungen in axialer Richtung auf, die derart entlang des Umfangs der Filterelementhaltevorrichtung angeordnet sind, dass sich die Ausnehmungen über einen Winkel von wenigstens 90 Grad verteilen, Auf diese Weise kann sicher gestellt werden, dass das erfindungsgemäße Filterelement, welches für einen axialen Einbau vorgesehen ist, versehentlich durch ein Filterelement für einen radialen Einbau ersetzt wird. Dies erhöht die Betriebssicherheit des Luftfilters.

Gemäß einer beispielhaften Ausführungsform der Erfindung weist die Halteanordnung eine Mehrzahl von Ausnehmungen in axialer Richtung auf, wobei die Mehrzahl von Ausnehmungen bezogen auf eine Mittelachse des Luftfilterelementes eine Winkelteilung aufweist, die eine eindeutige Einbaulage des Luftfilterelementes in einem Luftfiltergehäuse definiert. Auf diese Weise kann sicher gestellt werden, dass das zwar korrekt ausgewählte Filterelement jedoch falsch in dem Luftfiltergehäuse positioniert wird. Alternativ oder ergänzend können die Anordnung und/oder die Ausbildung der Ausnehmungen auch zu einer Kodierung dienen, d. h. es wird dadurch der Einbau eines baulich weitgehend identischen, aber dennoch falschen Filterelementes vermieden.

Unter einer Winkelteilung ist dabei der durch jeweils zwei Ausnehmungen bezüglich einer Zentralachse aufgespannte Winke! zu verstehen. Unterscheiden sich die Winkel zwischen unterschiedlichen Paaren von Ausnehmungen, so ist bei einer entsprechenden Winkelteilungswahl eine falsche rotatorische Positionierung des Luftfilterelementes in einem Filtergehäuse nicht möglich. Es sei verstanden, dass diese Lagedefinition auch durch ein nicht-symmetrisches Anordnen von unterschiedlichen Ausnehmungen erreicht werden kann, die nicht mit entsprechenden Vorsprüngen im Filtergehäuse zusammenpassen. Statt Vorsprüngen am Gehäuse und Ausnehmungen am Filterelement können teilweise oder ganz auch Vorsprünge am Filterelement und Ausnehmungen am Filtergehäuse vorgesehen sein.

Gemäß einer beispielhaften Ausführungsform der Erfindung weist die Filterelementhaltevorrichtung eine Dichtungsanordnung mit einer um das Filtermedium umlaufenden Dichtungslinie auf, wobei die Ausnehmungen wenigstens teilweise zwischen der umlaufenden Dichtungslinie und dem Filtermedium angeordnet sind. Auf diese Weise können die Ausnehmungen innerhalb einer Dichtungsbarriere angeordnet sein. In diesem Fall kann eine sacklochförmige Ausnehmung sinnvoll sein, die keinen Durchgang zwischen Rohluftseite und Reinluftseite herstellt, sondern diese Bereiche voneinander getrennt hält. Weiterhin können die Außenabmessungen des Filterelementes gering gehalten werden, da außerhalb der Dichtungslinie keine Ausnehmung mehr vorgesehen werden muss.

Gemäß einer beispielhaften Ausführungsform der Erfindung sind die zwischen der umlaufenden Dichtungslinie und dem Filtermedium angeordneten Ausnehmungen geschlossene Ausnehmungen. Auf diese Weise kann die Rohtuftseite von der Reinluftseite getrennt gehalten werden.

Ferner weist die Dichtungsanordnung ein elastisches Dichtungsmaterial auf, wobei die Dichtungslinie auf dem Dichtungsmaterial liegt. Auf diese Weise kann eine zuverlässige Dichtung erzielt werden, die sich an den zu dichtenden Spalt anpasst. Das Vorsehen einer Dichtung an dem Filterelement gewährleistet, dass eine empfindliche Komponente einer Dichtung bei jedem Filterelementwechsel mit gewechselt wird und immer eine neue Dichtung verwendet wird. Andernfalls müsste immer auch eine Ersatzdichtung mitgeführt werden, für den Fall, dass eine gehäuseseitige Dichtung defekt ist.

Gemäß einer beispielhaften Ausführungsform der Erfindung weist die Halteanordnung eine Haltefläche auf, die ausgelegt ist, um Haltekräfte zwischen dem Luftfilterelement und einem Luftfiltergehäuse zu übertragen, wobei die Haltefläche zwischen der umlaufenden Dichtungslinie und dem Filtermedium angeordnet ist. Auf diese Weise kann eine axiale Positionierung des Dichtungselementes sichergestellt werden, Die Positionierung innerhalb der Dichtung begrenzt ferner das Baumaß des Filterelementes, da radial außerhalb der Dichtung keine weiteren Flächen bereitgestellt werden müssen.

Vorzugsweise ist die Haltefläche gegenüber einer in dieselbe Richtung gewandten Dichtfläche, die von der filterelementseitigen Dichtungsanordnung gebildet ist, axial versetzt angeordnet ist. Beispielsweise zeichnet sich ein axial vorversetzte Haltefläche durch den Vorteil auf, das durch den axialen Versatz vermieden werden kann, dass beim Anformen der Dichtungsanordnung an die Halteanordnung, Dichtungsmasse auf die Haltefläche gelangen kann. Außerdem ist es fertigungstechnisch vorteilhaft, wenn auf Seiten des Filtergehäuses die korrespondierende Haltefläche und Dichtfläche auf gleicher Höhe angeordnet sind. Indem die filterelementseitige Haltefläche gegenüber der in dieselbe Richtung gewandten Dichtfläche axial rückversetzt ist, ist eine definierte Verpressung der Dichtung gewährleistet.

Durch ein besonders betriebssicheres Halten des Luftfilterelements im Filtergehäuse zeichnet sich die Erfindung aus, bei der die Halteanordnung an einander gegenüberliegenden Seiten jeweils eine zwischen der Dichtungslinie und dem Filtermedium angeordnete Haltefläche aufweist, Die Halteflächen sind folglich in entgegengesetzte Richtungen gewandt und wiederum zur Anlage an filtergehäuseseitigen Halteflächen ausgelegt. Das Filterelement kann in beide axiale Richtungen betriebssicher und positionsgenau gehalten werden.

Ferner ist der Verlauf der Dichtungslinie abschnittsweise von dem Filtermedium radial weggekrümmt. Die abschnittsweise Wegkrümmung stellt eine in Blickrichtung seitlich auf das Filterelement konkave Dichtungslinie dar. Eine derartige Einbuchtung ermöglicht die Positionierung weiterer konstruktiver Elemente, etwa einer Verstärkungsrippe, einer Verstrebung, einer Verschraubung oder Ähnliches.

Durch einen besonders gleichmäßigen Verlauf zeichnet sich eine Ausführungsbeispiel der Erfindung aus, bei welchem die Dichtungsline entlang mehrerer Abschnitte von dem Filtermedium radial weggekrümmt verläuft, wobei jedem weggekrümmten Abschnitt ein Abschnitt zugeordnet ist, in welchem die Dichtungslinie auf das Filtermedium radial zugekrümmt verläuft, Ein baulich kompaktes Filterelement ergibt sich, wenn die einander zugeordneten Abschnitte in Umfangsrichtung des Luftfilterelements unmittelbar aufeinander folgen.

Vorzugsweise verläuft die Dichtungslinie in einem oder mehreren Abschnitten mit zumindest nahezu konstantem Krümmungsradius von dem Filtermedium radial weggekrümmt und/oder verläuft die Dichtungslinie in einem oder mehreren Abschnitten mit zumindest nahezu konstantem Krümmungsradius auf das Fiitermedium zugekrümmt. Die gekrümmten Abschnitte sind folglich kreissegmentförmig, Beispielsweise vereinfacht sich dadurch die Programmierung des Verfahrweges eines Dosierrobotores entlang der gekrümmten Abschnitte, bei der Herstellung der Dichtungsanordnung.

Alternativ oder ergänzend kann die Dichtungslinie zumindest einen gekrümmten Abschnitt aufweisen, welcher ellipsensegment-, parabelsegment- oder hyperbelsegmentförmig ausgebildet ist. Ebenfalls kann es vorteilhaft sein, wenn zumindest am Übergang zwischen einem geraden und einem gekrümmten Abschnitt die Änderung des Krümmungsradius in Abhängigkeit einer stetigen Funktion ausgebildet ist Vorzugsweise trifft dies für die Änderung der Krümmungsradius entlang der zumindest weitgehend gesamten Dichtungslinie zu.

Durch eine platzsparende Bauform zeichnet sich eine Weiterbildung der Erfindung aus, bei welcher die Dichtungsline entlang eines Abschnitts von dem Filtermedium radial weggekrümmt, entlang eines Abschnitts gerade und entlang eines Abschnitts wiederum von dem Filtermedium radial weggekrümmt verläuft, wobei die drei Abschnitte in Umfangrichtung des Luftfilterelements, insbesondere unmittelbar, aufeinander folgen. Dank dieser Maßnahme ergibt sich im Bereich des geraden Abschnittes eine Art von Einbuchtung, in welcher z. B. gehäuseseitige Befestigungsmittel angeordnet werden können.

Gemäß einer beispielhaften Ausführungsform der Erfindung erstreckt sich die Halteanordnung in axiale Richtung entlang des Filtermediums über wenigstens einen Teil des Filtermediums, wobei der sich in axiale Richtung erstreckende Teil als Abstandhalter zu einem Luftfiltergehäuse ausgeführt ist. Auf diese Weise kann die Halteanordnung zugleich auch als Abstandshalter verwendet werden, um das Filterelement seitlich in dem Luftfiltergehäuse abzustützen. Dies stabilisiert insbesondere axial lang gestreckte Filterelemente im Filtergehäuse. Die axiale Erstreckung kann einförmig mit der Halteanordnung verbunden sein oder auch aus mehreren Teilen zusammengefügt sein. Die axial langgestreckten Teile können starr oder flexibel bzw. elastisch sein. Die axiale Erstreckung kann an einer von der Haltefläche abgewandten Seite ein in Richtung des Filtermediums zulaufendes Ende aufweisen, um ein Einführen des Filterelementes in das Luftfiltergehäuse zu erleichtern.

Gemäß einer beispielhaften Ausführungsform der Erfindung ist die Dichtungsanordnung ausgelegt für eine Einbringung des Luftfilterelementes in ein Luftfiltergehäuse entlang einer axialen Richtung. Auf diese Weise kann das Filtergehäuse mit einem rundum geschlossenen Gehäusekörper mit axialer Öffnung vorgesehen sein, durch die das Filterelement axial eingeführt werden kann. Mit einem entsprechenden Deckel kann der Gehäusekörper dann verschlossen werden. Aufgrund der umlaufenden Dichtung ist bei einer axialen Dichtung eine gute Abdichtungswirkung zu erwarten.

Gemäß einer beispielhaften Ausführungsform der Erfindung erstreckt sich die radiale Ausbuchtung im Wesentlichen nur über eine der Außenkanten der Filterelementhaltevorrichtung. Auf diese Weise kann das Filterelement in eine Richtung bezüglich der Außenabmessungen minimiert werden. Insbesondere steht die Ausbuchtung nicht über die benachbarte Außenkante hinaus. Dadurch, dass die Ausbuchtung nur über jeweils eine Kante hinaus steht, kann das Baumaß des Filterelementes bezüglich der nicht überragten Kante verringert werden. Bei mehreren Ausbuchtungen an einem Filterelement können die Ausbuchtungen nur über zwei gegenüberliegende Seiten der Filterelementaufnahme hinausragen, jedoch nicht über die beiden anderen gegenüberliegenden Seiten, Insbesondere können vier Ausbuchtungen vorgesehen sein, von denen jeweils zwei an jeder von zwei gegenüberliegenden Seiten vorgesehen sind, insbesondere nahe an oder unmittelbar an den axialen Kanten eines Filterelementes.

Gemäß einer beispielhaften Ausführungsform der Erfindung steht die radiale Ausbuchtung über die erste Seitenfläche und die zweite Seitenfläche etwa im gleichen Maß hinaus. Auf diese Weise kann die notwendige Auskragungslänge der Ausbuchtung verringert werden. Während bei einem Überragen über nur eine Seitenfläche und einem vorgegebenen minimalen Radius R2 die Auskragungslänge mindestens der Länge des Radius R2 beträgt, kann bei einem gleichmäßigen Überragen über zwei benachbarte Seitenflächen, die in einem 90 Grad Winkel zueinander stehen, bei gleichem minimalen Radius R2 die Auskragtingslänge auf ca. 0,3 *R2 reduziert werden, ohne den minimalen Radius R2 verringern zu müssen.

Die Dichtungsanordnung weist ein um das Filtermedium umlaufendes elastisches Dichtungsmaterial auf, wobei das Dichtungsmaterial über die Ausbuchtung verläuft. Auf diese Weise kann ein aufzubringendes Dichtungsmaterial leicht, einfach und schnell entlang der vorgesehenen Dichtungslinie aufgebracht werden.

Gemäß einer beispielhaften Ausführungsform der Erfindung weist das Filtermedium vier Filtermediumseitenflächen und verlaufen die Filtermediumseitenflächen und die Anströmfläche und die Abströmfläche vorzugsweise senkrecht zueinander. Es ergibt ein einfach herzustellendes quaderförmiges Filtermedium.

Gemäß einer beispielhaften Ausführungsform der Erfindung wird ein Luftfiltergehäuse bereitgestellt, das ausgelegt ist ein oben beschriebenes Filterelement aufzunehmen. Das Luftfiltergehäuse weist eine Anströmöffnung, eine Abströmöffnung und eine Filterelementaufnahme auf, wobei sich die Filterelementaufnahme zwischen der Anströmöffnung und der Abströmöffnung befindet. Die Filterelementaufnahme weist eine von einem einzusetzenden Filterelement radial weggerichtete Ausbuchtung und eine umlaufende Dichtungsanordnung auf, wobei die Dichtungsanordnung eine umlaufende Dichtungslinie aufweist. Die Dichtungslinie verläuft in der radialen Ausbuchtung, wobei der Radius entlang des Verlaufs der Dichtungslinie größer ist als der Radius einer an der Ausbuchtung befindlichen Gehäuseinnenkante des Luftfiltergehäuses.

Gemäß einer beispielhaften Ausführungsform der Erfindung weist die Filterelementaufnahme eine Haltefläche auf, wobei sich die Haltefläche zwischen der umlaufenden Dichtungslinie und dem einzusetzenden Filterelement befindet. Auf diese Weise muss außerhalb der Dichtungsanordnung keine zusätzliche Haltefläche bereitgestellt werden, sodass die Abmessungen des Filterelementes gering gehalten werden kann.

Vorzugsweise sind die Haltefläche der Filterelementaufnahme und eine in dieselbe Richtung gewandte Dichtfläche der Filterelementaufnahme zumindest weitgehend auf gleicher axialer Höhe angeordnet. Aufgrund dieses Gleichmaßes müssen keine Fertigungstoleranzen zwischen den beiden Flächen berücksichtigt werden.

Gemäß einer beispielhaften Ausführungsform der Erfindung wird ein Luftfiltergehäuse bereitgestellt, das ausgelegt ist ein oben beschriebenes Filterelement aufzunehmen, wobei das Luftfiltergehäuse eine Anströmöffnung, eine Abströmöffnung und eine Filterelementaufnahme aufweist. Die Filterelementaufnahme befindet sich zwischen der Anströmöffnung und der Abströmöffnung, wobei die Filterelementaufnahme eine Haltefläche und eine Dichtungsanordnung mit einer um das Luftfiltergehäuse umlaufenden Dichtungslinie aufweist, wobei die Haltefläche zwischen der umlaufenden Dichtungslinie und dem einzusetzenden Filterelement angeordnet ist, Auf diese Weise kann das Luftfiltergehäuse kompakt ausgestaltet werden, insbesondere, da außerhalb der Dichtungslinie keine weiteren Elemente mehr angeordnet werden müssen.

Gemäß einer beispielhaften Ausführungsform der Erfindung wird ein Luftfiltergehäuse bereitgestellt, das ausgelegt ist ein oben beschriebenes Filterelement aufzunehmen, wobei das Luftfiltergehäuse eine Anströmöffnung, eine Abströmöffnung und eine Filterelementaufnahme aufweist. Die Filterelementaufnahme befindet sich zwischen der Anströmöffnung und der Abströmöffnung, wobei die Filterelementaufnahme eine von einem einzusetzenden Filterelement radial weggerichtete Ausbuchtung und eine umlaufende Dichtungsanordnung aufweist, wobei die Dichtungsanordnung eine umlaufende Dichtungslinie aufweist. Die Dichtungslinie verläuft in der radialen Ausbuchtung, wobei der Radius R2 entlang des Verlaufs der Dichtungslinie größer ist als der Radius R1 einer an der Ausbuchtung befindlichen Gehäuseinnenkante des Luftfiltergehäuses, Auf diese Weise kann eine kompakte Ausgestaltung eines Luftfiltergehäuses bereitgestellt werden mit einer Dichtungslinie mit einem für eine Fertigung günstigen großen Radius im Vergleich zu einem Radius einer Gehäuseinnenkante. Insbesondere ist ein derartiges Luftfiltergehäuse geeignet ein oben beschriebenes Filterelement mit einer analogen Dichtungsanordnung korrespondierend auszunehmen.

Gemäß einer beispielhaften Ausführungsform der Erfindung weist das Luftfiltergehäuse eine umlaufende Dichtungslinie auf, wobei der Verlauf der Dichtungslinie abschnittsweise von einem einzusetzenden Filterelement radial weggekrümmt ist. Auf diese Weise kann eine Dichtungsgeometrie am Filtergehäuse bereitgestellt werden, die in den entsprechenden Ausbuchtungen der radial weggekrümmten Abschnitte der Dichtungslinie einen Raum für etwa Verschraubungen, Versteifungen oder andere Elemente bereitstellen kann.

Gemäß einer beispielhaften Ausführungsform der Erfindung weist die Filterelementaufnahme wenigstens einen Vorsprung in axialer Richtung des Filterelementes auf, wobei der Vorsprung ausgelegt ist in eine filterelementseitige Ausnehmung einzugreifen,

Auf diese Weise wird ein Filtergehäuse bereitgestellt, welches mit dem oben beschriebenen Filterelement korrespondiert. Insbesondere können die Vorsprünge und die Ausnehmungen aufeinander abgestimmt sein.

Gemäß einer beispielhaften Ausführungsform der Erfindung weist die Filterelementaufnahme eine von einem einzusetzenden Filterelement radial weggerichtete Ausbuchtung auf, wobei die Dichtungslinie in der Ausbuchtung verläuft, wobei der Radius entlang des Verlaufs der Dichtungslinie größer ist als der Radius einer an der Ausbuchtung befindlichen Gehäuseinnenkante des Luftfiltergehäuses.

Auf diese Weise kann ein Dichtungsverlauf mit einem großen Radius im Vergleich zum Kantenradius einer Gehäuseinnenkarite bereitgestellt werden. Dies erlaubt eine vereinfachte Aufbringung einer Dichtungsmasse, bzw. die Aufnahme eines Filterelementes, welches derart mit einer Dichtmasse versehen ist. Die radiale Ausbuchtung kann sich dabei im Wesentlichen nur über eine der Seitenflächen des Filtergehäuses erstrecken. Alternativ kann sich die radiale Ausbuchtung auch über zwei benachbarte Seitenflächen des Filtergehäuses hinaus erstrecken, insbesondere im gleichen Maß.

Gemäß einer beispielhaften Ausführungsform der Erfindung wird ein Luftfilter mit einem oben beschrieben Luftfilterelement und einem oben beschriebenen Luftfiltergehäuse bereitgestellt, wobei das Luftfilterelement austauschbar in der Filterelementaufnahme des Luftfiltergehäuses angeordnet ist. Auf diese Weise kann durch die Austauschbarkeit die Filterieistung des Luftfilters durch Austausch des Filterelementes sicher gestellt werden.

Das Luftfilterelement und der Luftfilter, wie oben und im Folgenden beschrieben, dienen insbesondere zur Luftfiltration in Kraftfahrzeugen, Bau-oder Landmaschinen, Im Speziellen dienen sie zur Filtration der Ansaugluft einer Brennkraftmaschine oder zur Filtration der Zuluft eines Fahrzeuginnenraums. Sie können aber auch derart abgewandelt ausgebildet sein, dass sie für andere Fluide, insbesondere auch Flüssigkeiten und Flüssigkeitsgemische genutzt werden. Im Speziellen können sie insofern weitgehend baugleich, aber als Kraftstoff- oder Ölfilterelement für Kraftfahrzeuge bzw. Kraftstoff- oder Ölfilter für Kraftfahrzeuge ausgebildet sein.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

Diese und andere Aspekte der vorliegenden Erfindung werden durch die Bezugnahme auf die hier nachbeschriebenen beispielhaften Ausführungsformen erläutert und verdeutlicht.

### Kurze Beschreibung der Figuren

Beispielhafte Ausführungsformen werden im Folgenden mit Bezugnahme auf die folgenden Zeichnungen beschrieben.
- Fig. 1: zeigt ein Luftfilterelement gemäß einer beispielhaften Ausführungsform der Erfindung;
- Fig. 2 bis 4: zeigen ein Detail einer Ausnehmung gemäß einer beispielhaften Ausführungsform der Erfindung;
- Fig. 5: zeigt ein Detail einer Haltegeometrie gemäß einer beispielhaften Ausführungsform der Erfindung;
- Fig. 6: zeigt eine Dichtungsanordnung an einer Haltegeometrie gemäß einer beispielhaften Ausführungsform der Erfindung;
- Fig. 7: zeigt eine Aufsicht auf ein Filterelement gemäß einer beispielhaften Ausführungsform der Erfindung;
- Fig. 8: zeigt ein Luftfiltergehäuse zum Einsatz eines erfindungsgemäßen Filterelementes;
- Fig. 9: zeigt ein in ein Luftfiltergehäuse eingesetztes Filterelement gemäß einer beispielhaften Ausführungsform der Erfindung;
- Fig. 10: zeigt eine Endscheibe eines Filterelements gemäß einer beispielhaften Ausführungsform der Erfindung;
- Fig. 11 bis 13: zeigen verschiedene Teilansichten eines Filterelementes gemäß einer beispielhaften Ausführungsform der Erfindung;
- Fig. 14: zeigt eine ausschnittweise Schnittdarstellung eines in ein Luftfiltergehäuse eingesetzten Filterelementes gemäß einer beispielhaften Ausführungsform der Erfindung;
- Fig. 15: zeigt eine ausschnittweise Schnittdarstellung eines in ein Luftfiltergehäuse eingesetzten Filterelementes gemäß einer beispielhaften Ausführungsform der Erfindung;
- Fig. 16: zeigt eine Aufsicht auf ein Filterelement gemäß einer beispielhaften Ausführungsform der Erfindung;
- Fig. 17: zeigt ein in ein Luftfiltergehäuse eingesetztes Filterelement gemäß einer beispielhaften Ausführungsform der Erfindung;
- Fig. 18: zeigt eine ausschnittweise Schnittdarstellung eines in ein Luftfiltergehäuse eingesetzten Filterelementes gemäß einer beispielhaften Ausführungsform der Erfindung;
- Fig. 19: zeigt einen unteren Gehäuseteil eines Luftfiltergehäuses gemäß einer beispielhaften Ausführungsform der Erfindung;
- Fig. 20: zeigt ein Filterelement gemäß einer beispielhaften Ausführungsform der Erfindung;
- Fig. 21: zeigt eine Aufsicht auf ein Filterelement gemäß einer beispielhaften Ausführungsform der Erfindung;
- Fig. 22: zeigt eine Aufsicht auf ein Filterelement gemäß einer beispielhaften Ausführungsform der Erfindung,

### Detaillierte Beschreibung beispielhafter Ausführungsformen

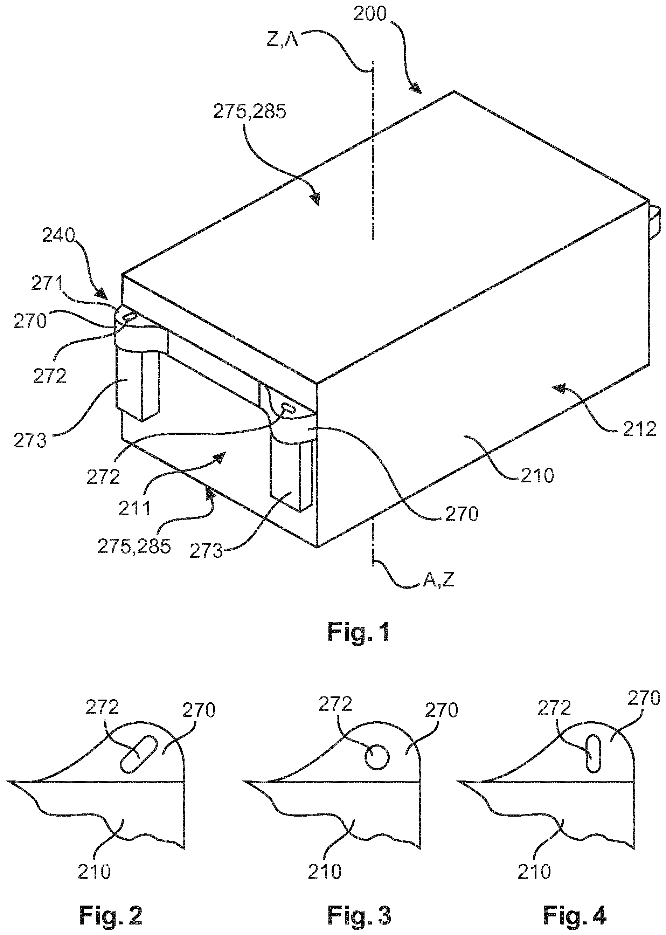

Fig. 1 zeigt ein Luftfilterelement 200 gemäß einer beispielhaften Ausführungsform der Erfindung, Das Luftfilterelement 200 weist eine Anströmfläche 275 und ein Abströmfläche 285 auf. Die Anströmfläche 275 kann in Fig. 1 sowohl auf der nach oben gerichteten Seite sein, als auch auf der nicht sichtbaren nach unten gerichteten Seite. Insbesondere kann das Filterelement 200 in beide Richtungen durchströmt werden, so dass die Anströmseite 275 und die Abströmseite 285 auch vertauscht sein können. Das Filterelement 200 weist eine Längsachse A auf, die sich durch die Durchströmungsrichtung definieren kann und die sich zwischen der Anströmfläche 275 und der Abströmfläche 285 erstreckt. Es sei verstanden, dass das Filterelement 200 auch gekröpft sein kann, sodass die Längsachse geneigt zur Durchströmungsrichtung angeordnet sein kann. Die Längsachse kann insbesondere auch gekrümmt sein, wenn etwa die anströmfläche und die Abströmfläche nicht parallel zueinander sind und/oder die Durchströmung des Filterelementes 200 nicht entlang einer geraden Linie sondern entlang einer gekrümmten Kurve erfolgt, Darüber hinaus weist das Luftfilterelement 200 eine zentrale Achse Z auf. Diese zentrale Achse Z markiert den Mittelpunkt bzw. eine gewisse Symmetrieachse. Diese kann für die Anströmfläche und die Abströmflache auch verschieden voneinander sein. Diese muss auch nicht zwingend übereinstimmen mit der Längserstreckungsachse A und muss auch nicht parallel zu dieser Achse liegen. Das Luftfilterelement 200 weist ein zwischen der Anströmfläche 275 und der Abströmfläche 285 liegendes Filtermedium 210 auf, Dieses Filtermedium kann beispielsweise aus einem Papier oder einem Kunststoff oder einem Vlies oder einem beliebigen anderen Filtermaterial bestehen. Das Filtermedium kann auf unterschiedliche Art und Weise gefertigt sein. Beispielsweise kann das Filtermedium ein aus Papier gefalteter Filterbalg sein oder auch ein aus welligen und ebenen Lagen verklebtes und geschichtetes Flötenfiltermedium sein. Das Filterelement 200 weist ferner eine Filterelementhaltevorrichtung 240 auf, die dazu dient, das Filterelement 200 in dem Filtergehäuse 105 festzulegen, Die Filterelementhaltevorrichtung 240 kann beispielsweise segmentweise an einer Außenmantelfläche des Filtermediums befestigt sein. Alternativ kann die Filterelementhaltevorrichtung auch eine um das Filtermedium 210 umlaufende Schale, Kragen oder Leiste sein. Die Umlaufende Filterelementhaltevorrichtung 240 ist insbesondere dann zweckmäßig, wenn eine umlaufende Dichtungsmasse an der Filterelementhaltevorrichtung 240 vorgesehen werden soll. Zum Halten des Filterelementes 200 in einem Filtergehäuse weist die Filterelementhaltevorrichtung 240 eine Halteanordnung 270 auf, wobei die Halteanordnung 270 Halteflächen 271 aufweist, die in der Lage sind, entsprechende Haltekräfte aufzunehmen, die auf das Filterelement 200 wirken. Diese Haltekräfte können über die Halteflächen 271 an das Filtergehäuse weitergeleitet werden. Die Halteanordnung 270 weist ferner eine oder mehrere Ausnehmungen 272 auf, die in der Lage sind einen entsprechenden gehäuseseitigen Vorsprung aufzunehmen, um auf diese Weise beispielsweise das Filterelement 200 in dem Gehäuse positionsgenau festzulegen. Diese Ausnehmung 272 kann sich beispielsweise an der Haltefläche 271 befinden. Die Ausnehmung kann zylindrisch oder konisch ausgestaltet sein. Sie kann kreisrund, elliptisch, oval oder eckig ausgestaltet sein. Die Halteanordnung kann in Form von Ausbuchtungen ausgestaltet sein, die es erlauben, auf entsprechenden Vorsprüngen in einem Gehäuse bzw, Ausnehmungen in einem Gehäuse aufzuliegen. Die Ausbuchtungen können sich dabei im Wesentlichen nur über eine der Seitenflächen erstrecken, Insbesondere, wenn die Ausbuchtungen an den Ecken des Filterelementes 200 angeordnet sind, wie in Fig. 1, können diese so ausgestaltet sein, dass sie nicht über die hier lange Seitenfläche des Filterelements 200 hinausragen. Die Ausbuchtung muss nicht zwingend an der Ecke angeordnet sin, sondern kann auch in der Mitte einer Seitenfläche des Filterelementes 200 angeordnet sein. Wenn eine Mehrzahl Ausbuchtungen 243 vorgesehen sind, können diese beispielsweise nur über die schmalen Stirnseiten 211 des Filterelementes 200 hinausragen, jedoch nicht über die breiten Seiten 212. Natürlich können die Ausbuchtungen auch nur über die langen Seiten 212, jedoch nicht über die kurzen Seiten 211 hinausragen. Dies vermindert das Baumaß von entweder der Breite oder der Länge des Filterelementes 200, Die Haltevorrichtung kann ferner Abstandshalter 273 aufweisen, die in Fig. 1 sich axial entlang des Filtermediums 210 erstrecken. Diese Abstandshalter 273 können einen entsprechenden Abstand des Filterelementes 200 im Filtergehäuse 105 zu einer Filtergehäusewand sicherstellen, so dass das Filterelement 200 beispielsweise leicht zu entnehmen ist und eine definierte An- und Auflagefläche bezüglich des Filtergehäuses aufweist. Ferner können so mechanische Beanspruchungen leichter aufgenommen werden, wie etwa Stöße oder Vibrationen. Die Ausnehmungen 272 können dabei unterschiedliche Ausgestaltungen aufweisen, wie im Folgenden mit Bezugnahme auf die Fig. 2 bis 4 erläutert wird.

Fig. 2 zeigt eine beispielhafte Ausführungsform einer Halteanordnung, bei der an der Filterelementhaltevorrichtung 240 eine langlochförmige Ausnehmung 272 vorgesehen sein kann. Diese langlochförmige Ausnehmung ist in Fig. 2 diagonal angeordnet zu einer Außenkante des Filtermediums 210. Alternativ kann die Ausnehmung 272 in der Filterelementhaltevorrichtung 240 auch rund ausgestaltet sein, so wie in Fig. 3 zu sehen ist. Alternativ kann das Langloch auch parallel zu einer Außenkante des Filtermediums 210 angeordnet sein, so wie in Fig. 4 gezeigt ist Es sei verstanden, dass alternativ zu den gezeigten Ausgestaltungen der Ausnehmung gemäß der Fig. 2, 3 und 4 die Ausnehmung auch andere Formen aufweisen kann, insbesondere mit einer kantigen Außenkontur bzw. einer Freiform oder auch einem Langloch mit einer anderen Ausrichtung, als der Ausrichtung gemäß Fig. 2 bzw. Fig. 4. Die Ausnehmung 272 kann dabei eine vollständig durch die Halteanordnung 270 hindurchragende Ausnehmung sein. Alternativ kann die Ausnehmung 272 jedoch auch eine geschlossene Ausnehmung sein, die beispielsweise in Form eines Sacklochs ausgestaltet sein kann. Diese Ausnehmung kann dann sowohl von der Oberseite der Halteanordnung 270 vorgesehen sein, so wie in Fig. 1 gezeigt. Alternativ kann die Ausnehmung auch von unterhalb der Halteanordnung 270 vorgesehen sein, was jedoch in Fig. 1 bei einem Sackloch aufgrund der Perspektive nicht sichtbar wäre. Die Ausnehmung kann konisch ausgestaltet sein, um einen Zentriereffekt zu erreichen. Bei einem Vorsehen von mehreren Ausnehmungen kann eine erste Ausnehmung 272 an einer ersten Ausbuchtung 243 kreisrund sein. Eine zweite Ausnehmung an einer zweiten Ausbuchtung kann ein Langloch aufweisen, um über die erste Ausnehmung eine Festlegung des Filterelementes 200 zu erreichen, und dennoch eine geringfügige Bewegung, z. B. zum Toleranz- oder Wärmeausdehnungsausgleich, in eine Langlochrichtung zu ermöglichen. Die Halteanordnung kann dabei eine Ausbuchtung darstellen, die, wie in Fig. 1 bis 4 gezeigt ist, einen im Wesentlichen kontinuierlich gekrümmten Konturverlauf aufweist. Auf diese Weise kann eine verhältnismäßig einfache Abdichtung erreicht werden, wie im Folgenden noch erläutert wird.

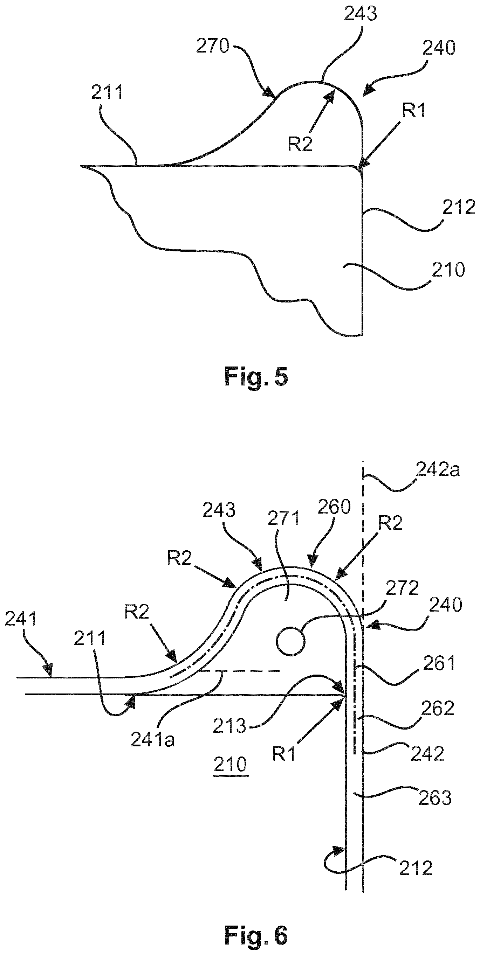

Insbesondere bei Filterelementen mit kleinen Kantenradien kann eine besondere Schwierigkeit darin bestehen, das Filterelement innerhalb eines Luftfiltergehäuses zuverlässig abzudichten, um die Reinluftseite von der Rohluftseite zu trennen. Für eine Dichtungsanordnung ist es daher unter gewissen Umständen vorteilhaft, wenn diese einen vergrößerten Radius aufweist. Dies ist insbesondere auch für den Fertigungsprozess von Bedeutung, bei dem eine geringere Veränderung des Radius , d.h. eine geringere Krümmung einen Dosierungsvorgang von Dichtungsmaterial erleichtert, Im Allgemeinen ist es in einem Fertigungsprozess leichter einen größeren Radius abzufahren als einen scharfkantigen Übergang an einer Kante. Dies wird mit Bezugnahme auf Fig. 5 und 6 näher erläutert

Fig. 5 zeigt eine Detailansicht einer Halteanordnung 270, die in Form einer Ausbuchtung 243 dargestellt ist. Diese Ausbuchtung erstreckt sich von dem Filtermedium 210 lediglich über eine Seitenfläche 211 des Filtermediums 210 hinaus. Die Halteanordnung 270 ragt in Fig. 5 jedoch nicht über die Seitenfläche 212 hinaus. Die Kontur kann beispielsweise gerade entlang der Seitenkante 212 verlaufen, dann einem Radius R2 um ca. 135 Grad gegen den Uhrzeigersinn folgen, um dann dem Radius R2 um ca, 45 Grad im Uhrzeigersinn zu folgen, um dann wieder gerade entlang der Seitenfläche 211 zu folgen. Dabei ragt die Ausbuchtung nicht über die Seitenfläche 212 hinaus.

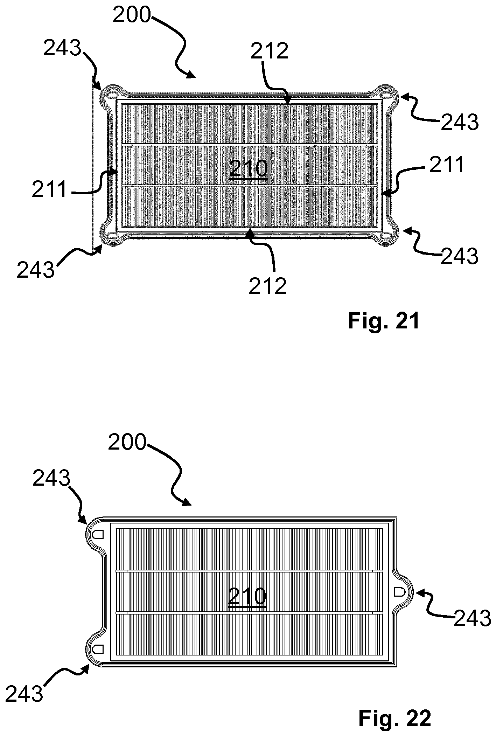

Die Ausbuchtung kann aber auch ausgehend von dem geraden Verlauf entlang der Seitenfläche 212 zunächst einem Radius R2 um 225 Grad gegen den Uhrzeigersinn folgen, dann dem Radius von R2 um 45 Grad im Uhrzeigersinn, um anschließend wieder der Seitenfläche 211 gerade zu folgen. Bei der letzteren Geometrie (Fig. 21) ragt die Ausbuchtung über sowohl die Seitenfläche 211, als auch die Seitenfläche 212 hinaus, und zwar im Wesentlichen im gleichen Maß. In beiden zuvor genannten Fällen ist der Radius nicht kleiner als R1. Die Kümmungsradien, welche die Dichtungslinie 261 im Eckbereich durchläuft, sind dank der Ausbuchtung 243 größer als, für den Fall, dass die Dichtungslinie 261 im Eckbereich in unmittelbarer Nähe des Filtermediums 210 verläuft.

Um bei der in Fig. 5 gezeigten Anordnung eine Dichtungsmasse aufzubringen, kann ein Dosierautomat nun die Kontur des Filterelementes 200 selbst abfahren, wobei jedoch bei einem Erreichen eines Endes der Seitenfläche 212 ein kleiner Radius R1 abgefahren werden muss, um anschließend eine Dichtungsmasse entlang der Seitenfläche 211 aufzubringen. Dieser starke Richtungswechsel führt zu Ungenauigkeiten in der Dosierung und birgt die Gefahr einer Über- oder Unterdosierung von Dichtungsmasse. Die Ausbuchtung 243 ermöglicht jedoch einem Dosierautomaten einen größeren Radius R2 abzufahren, der einen geringeren Gradienten aufweist als der scharfkantige Radius R1. In der Fig. 5 kann der Dosierautomat nun über das Ende der Seitenkante 212 hinaus der Kontur der Halteanordnung 270 folgen, um so lediglich Kurven mit einem größeren Radius R2 abfahren zu müssen, um dann am Ende der Halteanordnung 270 auf die Seitenfläche 211 zu gelangen. In Fig. 5 ist eine Halteanordnung 270 bzw. Filterelementhaltevorrichtung 240 gezeigt, die lediglich an einem Teilstück des Filtermediums 210 angebracht ist. Bei einer solchen Geometrie der Halteanordnung kann die Dichtmasse, wenn gewünscht, außerhalb des Teilstückes direkt an das Filtermedium 210 angespritzt werden, und zwar an der Seitenfläche 212 bis zu deren Ende, dann der Ausbuchtung folgend und anschließend an der Seitenfläche 211. Die Filterelementhaltevorrichtung 240 kann jedoch auch einen umlaufenden Kragen aufweisen, auf dem dann die Dichtungsmasse platziert werden kann. Die Filterelementhaltevorrichtung 240 kann dabei wiederum dicht mit dem Filtermedium 210 verklebt sein.

Fig. 6 zeigt eine beispielhafte Ausführungsform der Erfindung, bei der eine Dichtungsmasse 263 auf einer Filterelementhalteanordnung 240 aufgebracht ist. Dabei kann die Filterelementhalteanordnung über das Filtermedium 210 hinausragen und eine Art Kragen darstellen, auf den die Dichtungsmasse 263 aufgebracht werden kann. Die in Fig. 6 gezeigte Darstellung kann dabei aber auch als eine Darstellung einer umlaufenden Filterelementhalteanordnung 240 betrachtet werden, auf die eine Dichtungsmasse noch aufgebracht werden muss, wobei die strichpunktierte Linie in beiden Fällen eine Dichtungslinie 261 darstellt, Die Auflagefläche der Filterelementhalteanordnung 240 stellt dabei eine Dichtungsfläche dar, auf die ein elastisches Dichtungsmaterial 263 aufgebracht werden kann. Auch in Fig. 6 ist erkennbar, dass der Radius der Dichtungsmasse R2 wesentlich größer ist als der Radius R1 des Filtermediums 210, so dass ein entsprechender Dosierungsautomat die Dichtungslinie 261 mit einer wesentlich schnelleren Geschwindigkeit abfahren kann als eine scharfe Kante 213 des Filtermediums 210. Dabei ragt die Ausbuchtung 243 in der in Fig. 6 gezeigten Ausführungsform im Wesentlichen nur über die Seitenfläche 211 des Filtermediums 210 hinaus, jedoch im Wesentlichen nicht über die Seitenfläche 212. Die Ausbuchtung 243 erstreckt sich dabei in einem Winkelsektor, der gebildet wird durch die in Richtung der Kante 213 fortgesetzte Außenkante 241 der Filterelementhaltevorrichtung 240, in Fig. 6 mit einer strichlierten Linie 241a gekennzeichnet, und einer Fortsetzung der zweiten Außenkante 242, die in Fig. 6 mit einer strichlierten Linie 242a gekennzeichnet wird. Auf diese Weise kann die gesamte Breite zwischen der Außenkante 242 der Filterelementhaltevorrichtung und der gegenüberliegenden Seite der Filterelementhaltevorrichtung (nicht gezeigt) gering gehalten werden, wodurch sich das gesamte Einbaumaß des Filterelementes vermindert. Die Ausbuchtung 243 hat somit die Funktion, dass der Radius einer Dichtungsmasse R2 groß gehalten werden kann, um einen schnellen Fertigungsprozess zu ermöglichen, Darüber hinaus hat die Ausbuchtung 243 jedoch noch die weitere Funktion, dass diese eine geeignete Stelle für eine Ausnehmung 272 bereitstellt, Da diese Fläche 271 ohnehin vorhanden ist, muss keine weitere zusätzliche Fläche mehr bereitgestellt werden, um neben der Dichtung mit einem großen Radius eine Haltefläche bzw. eine Ausnehmung bereitzustellen. Somit weist die ohrenförmige Ausbuchtung 243 die kombinierte Funktion auf sowohl eine Haltefläche 271 bzw. eine Fläche für eine Ausnehmung 272 bereitzustellen als auch eine optimierte Fläche für eine Dichtungsanordnung 260. Die Ausnehmung 272 kann dabei als Sackloch ausgestaltet sein, Dies hat die Wirkung, dass die Ausnehmung keinen Luftdurchgang zwischen der Rein- und Rohluftseite darstellt, insbesondere, wenn sich die Ausnehmung zwischen der Dichtungslinie 261 und dem Filtermedium 210 befindet.

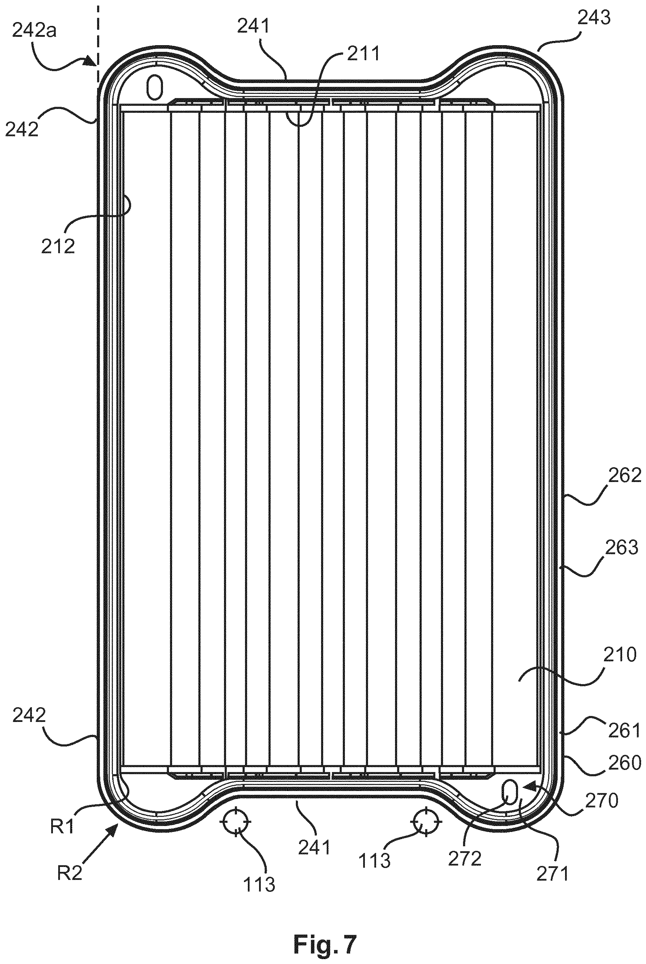

Mit Bezugnahme auf Fig. 7 wird nun die Aufsicht auf ein erfindungsgemäßes Filterelement 200 gezeigt. Das in Fig. 7 gezeigte Filterelement 200 weist an seinen vier Ecken jeweils Ausbuchtungen 243 auf. Diese Ausbuchtungen 243 dienen auch hier analog zu der Geometrie der Fig. 6, sowohl dazu eine Dichtungsanordnung 260 mit einem vergrößerten Radius R2 aufzunehmen, als auch eine Haltefläche 271 bereitzustellen. Dadurch kann bei Bedarf auch eine Ausnehmung 272 auf der Haltefläche 271 bzw. eine Ausnehmung in der Halteanordnung 270 vorgesehen sein. Da die Ausbuchtungen 243 nicht über die Außenkante 242 bzw. deren Fortsetzung 242a der Filterelementhaltevorrichtung 240 hinausgehen, kann die gesamte Breite des Filterelementes gering gehalten werden, Insbesondere erstrecken sich die Ausbuchtungen 243 nur in einem Winkel, der gebildet wird zwischen der Außenkante 241 und ihrer geraden Fortsetzung 241a einerseits und der Fortsetzung 242a der Außenkante 242 andererseits.

Im Folgenden wird der Verlauf der Dichtungslinie 261 anhand Fig. 7 im Detail erläutert Ausgehend von der in Fig. 7 linken Seitenmitte des Luftfilterelementes 200 folgt die Dichtungslinie 261 in Umfangsrichtung des Luftfilterelementes 200 im Uhrzeigersinn zunächst in einem geraden Abschnitt der Filtermediumseitenfläche 212. In etwa auf Höhe der Kante zwischen den Filtermediumseitenflächen 212 und 211 geht der gerade Abschnitt unmittelbar in einen auf das Filtermedium 210 radial zugekrümmten (in Fig. 7 nach rechts gekrümmten bzw. im Uhrzeigersinn gekrümmten) Abschnitt über. In diesem Abschnitt weist die Dichtungslinie 261 zumindest nahezu einen konstanten Krümmungsradius auf, z. B, im Bereich von ca. 20 bis 40 mm, vorzugsweise im Bereich von 25 bis 35 mm. Es handelt sich also um einen kreissegmentförmigen Abschnitt. Die Dichtungslinie 210 folgt dem kreissegmentförmigen Abschnitt um ca. 135°. Nun folgt unmittelbar ein von dem Filtermedium 210 radial weggekrümmter (in Fig. 7 nach links gekrümmter bzw. gegen den Uhrzeigersinn gekrümmter) Abschnitt, dessen Krümmungsradius ebenfalls vorzugsweise nahezu konstant und in etwa gleich groß wie, vorzugsweise etwas kleiner als der Krümmungsradius des vorhergehenden Abschnittes ist. Dieser weggekrümmte Abschnitt erstreckt sich über ca. 45°. Als Nächstes folgt ein gerader Abschnitt entlang der Filtermediumseitenfläche 211, der in einen weiteren weggekrümmten Abschnitt, der im Wesentlichen denselben Krümmungsradius (z. B. 20 bis 40 mm) und dasselbe Winkelmaß (z. B. ca. 135°) wie der erstgenannte weggekrümmte Abschnitt aufweist. Schließlich folgt ein auf das Filtermedium 210 zugekrümmter Abschnitt, der wiederum im Wesentlichen denselben Krümmungsradius und dasselbe Winkelmaß wie der erstgenannte zugekrümmte Abschnitt aufweist. Auf Höhe der Kante zwischen der Filtermediumseitenfläche 211 und der anderen Filtermediumseitenfläche 212 geht der zugekrümmte Abschnitt in einen langen geraden Abschnitt entlang der Filtermediumseitenfläche 212 über. Nun folgen wieder zugegekrümmte und weggekrümmte Abschnitte usw,

Insgesamt sind in jedem der vier Eckbereich des Luftfilterelementes 200 zur Ausbildung jeweils einer Ausbuchtung 243 ein auf das Filtermedium 210 zugekrümmter und ein von dem Filtermedium 210 weggekrümmter Abschnitt vorgesehen. Bei dem in Fig.7 gezeigten Beispiel weisen sämtliche weggekrümmte Abschnitte untereinander denselben Kümmungsradius und dasselbe Winkelmaß auf Auch sämtliche auf das Filtermedium 210 zugekrümmte Abschnitte weisen untereinander denselben Krümmungsradius und dasselbe Winkelmaß auf,

Wie in Fig. 7 angedeutet, kann in den Halteflächen 271 eine Ausnehmung 272 vorgesehen sein. Diese Ausnehmung ist in Fig. 7 als ein Langloch dargestellt. Analog den Ausführungen zu den Fig. 2 bis 4 kann dieses Langloch jedoch auch eine andere Ausrichtung aufweisen. Alternativ kann die Ausnehmung auch eine andere beliebige Form aufweisen. Insbesondere kann die Ausnehmung als ein Durchgangsloch ausgestaltet sein. Die Ausnehmung 272 kann jedoch auch als ein Sackloch bzw. als eine geschlossene Ausnehmung ausgestaltet sein. Diese Ausnehmung erlaubt es, beispielsweise einen gehäuseseitigen Vorsprung aufzunehmen, um das Luftfilterelement 200 in einem Luftfiltergehäuse ordnungsgemäß zu positionieren. Insbesondere bei Luftfilterelementen, die nicht augenscheinlich eine bevorzugte Einbauorientierung aufweisen, kann ein entsprechender Vorsprung gehäuseseitig bzw. eine Ausnehmung an dem Luftfilterelement sicherstellen, dass das Luftfilterelement in einer ordnungsgemäßen Orientierung in das Luftfiltergehäuse eingesetzt wird. Die Dichtungsfläche 262 bzw. die Dichtungslinie 261 kann nach einem Verlauf entlang der Längsseiten 212 des Filterelementes 200 und nach Umlaufen der Ausbuchtung 243 wieder entlang der Schmalseite 211 des Filterelementes 200 geführt werden. Dadurch kann das Filterelement 200 zwischen den entsprechenden Ausbuchtungen 243 ein geringeres Einbaumaß aufweisen, so dass beispielsweise gehäuseseitige Einrichtungen 113, wie beispielsweise Verstrebungen oder Verschraubungen in diesem Bereich angeordnet sein können, ohne dafür über das Filterelement 200 bzw. dessen Ausbuchtungen 243 hinausragenden Platz bereitstellen zu müssen. Zu diesem Zweck kann der Radius der Ausbuchtung nach Durchlaufen eines 90-Grad-Kreissegmentes beispielsweise ein weiteres 45-Grad-Kreissegment entlang der gleichen Krümmung durchlaufen, um dann eine entgegengesetzte Krümmung von wiederum einem Kreissegment von 45 Grad zu durchlaufen, um anschließend wieder eine parallel zur Außenkante 211 verlaufende Ausrichtung zu erhalten. Der Radius R2 kann dabei im Wesentlichen beibehalten werden, lediglich die Krümmung ändert sich bei dem Durchlaufen des Umfangs phasenweise von einer Rechtskrümmung auf eine Linkskrümmung bzw. umgekehrt.

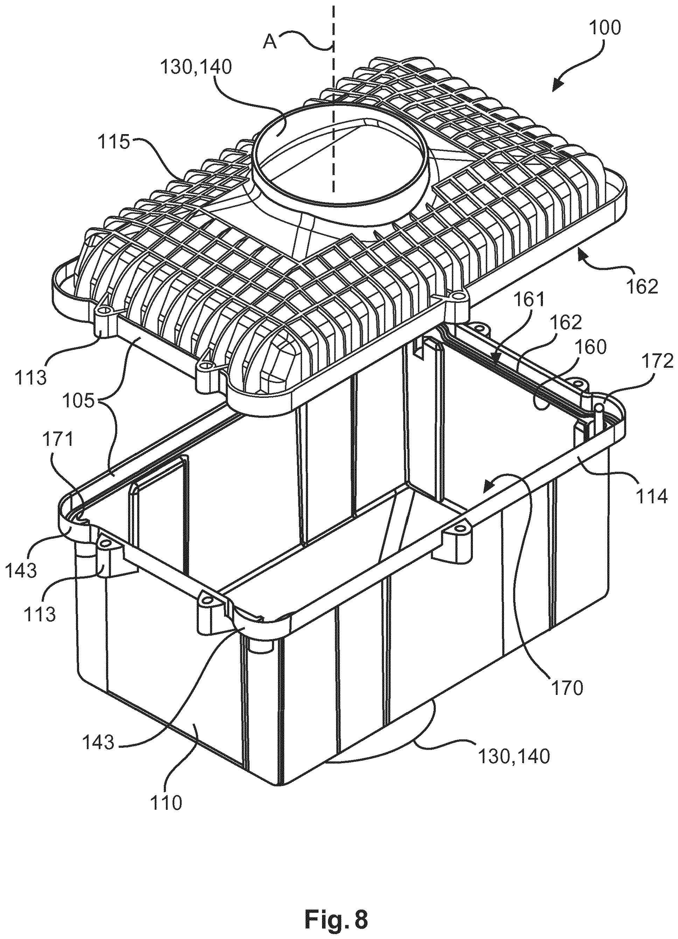

Fig. 8 zeigt eine beispielhafte Ausführungsform eines Luftfiltergehäuses zum Einsatz eines erfindungsgemäßen Luftfilterelementes. Das in Fig. 8 gezeigte Luftfiltergehäuse 105 eines Luftfilters 100 weist einen Gehäusekörper 110 und einen Gehäusedeckel 115 auf. In dem Gehäusedeckel 115 befinden sich in der in Fig. 8 gezeigten Ausführungsform ein Lufteinlass 130 bzw. Luftauslass 140. Diese in Fig. 8 gezeigte Öffnung kann dabei sowohl als ein Lufteinlass als auch alternativ als ein Luftauslass verwendet werden. Ebenso ist in dem Gehäusekörper 110 eine hier nicht vollständig zu sehende Öffnung vorhanden, die ebenfalls als ein Lufteinlass 130 als auch als Luftauslass 140 verwendet werden kann. Der Gehäusedeckel 115 weist dabei in der hier gezeigten Ausführungsform eine Anordnung von Verstärkungsrippen auf, Der Gehäusekörper 110 weist einen Kragen 114 auf. Dieser Kragen weist eine korrespondierende Kontur auf zu der Außenkontur des Luftfilterelementes 200. Auf diese Weise kann beispielsweise die Filterelementhaltevorrichtung 240 mit der Kontur mit ihren vier Ausbuchtungen 243 (siehe Fig. 7) innerhalb des Kragens 114 angebracht werden. Die Dichtungsmasse 263 kann dabei sowohl auf der Oberseite der Filterelementhaltevorrichtung als auch auf der Unterseite angebracht sein. Dementsprechend befindet sich die entsprechende Gegendichtfläche 162 der Gehäuseseitigen Dichtungsanordnung 160 an dem Gehäuse entweder an dem Gehäusekörper 110 oder an dem Gehäusedeckel 115. Die Dichtlinie 161 ist als umlaufende Dichtungslinie ausgestaltet. Bedingt durch die Ausbuchtungen 143 verlauft die Dichtungslinie 161 am Gehäuse nicht mit einer ausschließlich positiven Krümmung, also von außen gesehen konvex, sondern weist neben den geraden Abschnitten auch konkave Abschnitte auf, insbesondere an den Schmalseiten. In den Kehlen der konkaven Dichtungslinie 161 können beispielsweise entsprechende Schraubenbefestigung 113 platzsparend angeordnet werden. In dem Gehäuse können entsprechende Vorsprünge 172 vorgesehen sein, die in die entsprechenden Ausnehmungen 272 des Filterelementes 200 einragen können. In dem Gehäuse ist eine Filterelementaufnahme 170 vorgesehen, die eine entsprechende Halteanordnung 270 des Filterelementes 200 aufnehmen kann. Die Vorsprünge 172 können an dieser Filterelementaufnahme 170 vorgesehen sein. Durch die entsprechende Ausgestaltung der Ausnehmungen 272 als Langlöcher kann eine gewisse Toleranz bei der Positionierung erreicht werden. Durch eine entsprechende Ausgestaltung der Vorsprünge 172 am Gehäuse bzw, der Ausnehmungen 272 kann außerdem sichergestellt sein, dass das Filterelement 200 nur in einer vorbestimmten Position in das Gehäuse eingebracht werden kann, Wie in Fig. 8 zu sehen ist, können in den entsprechend freigewordenen Bereichen, die zwischen den Ausbuchtungen 243 des Filterelementes 200 bzw. zwischen den Ausbuchtungen 143 des Gehäuses liegen, entsprechende gehäuseseitige Einrichtungen vorgesehen sein 113, wie beispielsweise Verschraubungen. Auf diese Weise wird die Gesamtabmessung des Gehäuses nicht vergrößert, obwohl die gehäuseseitigen Einrichtungen 113 über die entsprechende Kante des Gehäuses hinausragen. Ferner können die Halteflächen 271 auf entsprechenden Auflageflächen 171 in dem Gehäuse aufliegen, so dass eine ordnungsgemäße axiale Positionierung des Filterelementes 200 erreicht werden kann. Durch entsprechend gestaltete Auflageflächen kann zudem erreicht werden, dass die Dichtungsmasse 263 nur bis zu einem gewissen Maximalmaß komprimiert wird, um nicht durch die Verschraubung an dem Gehäusedeckel zerquetscht zu werden.

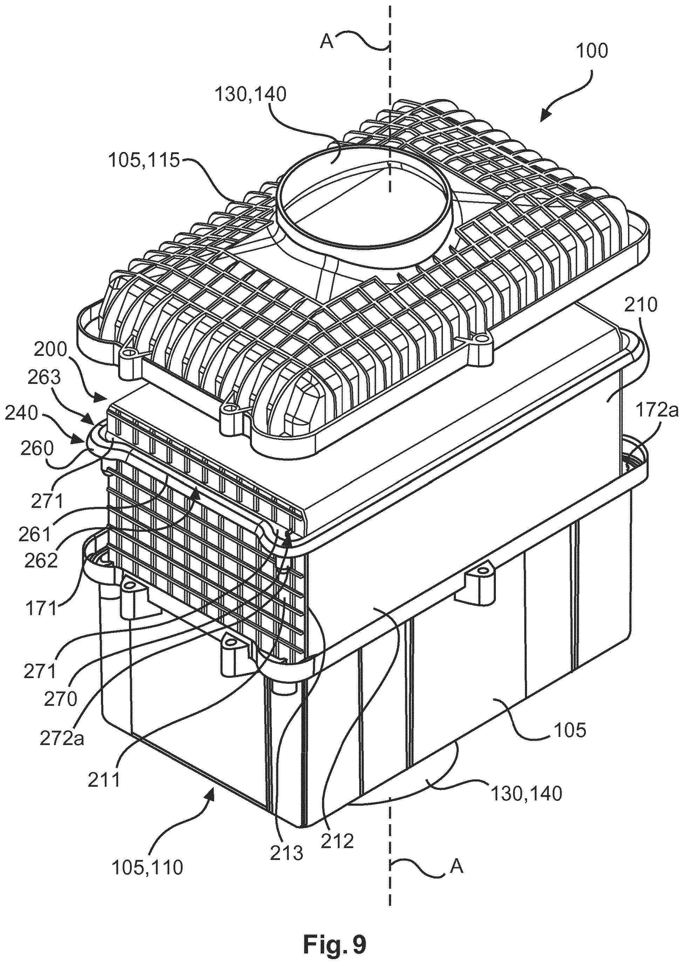

Fig. 9 zeigt eine Anordnung, bei der das Filterelement 200 in das Luftfiltergehäuse 105 eingesetzt wird, um so zusammen mit dem Luftfiltergehäuse 105 einen Luftfilter 100 zu bilden. In Fig. 9 ist alternativ gezeigt, dass anstelle entsprechender Ausnehmungen 272 auch entsprechende Vorsprünge 272a vorgesehen sein können, die in entsprechende Ausnehmungen 172a im Gehäuse eingreifen können. So kann beispielsweise durch eine Kombination von entsprechenden Vorsprüngen und Ausnehmungen an einem Filterelement 200 und entsprechend korrespondierenden Vorsprüngen und Ausnehmungen am Luftfiltergehäuse sichergestellt werden, dass nur die für das Luftfiltergehäuse passenden Filterelemente 200 eingesetzt werden können. Die Vorsprünge und Ausnehmungen können insbesondere so ausgestaltet sein, dass ein nicht korrekt passendes Luftfilterelement 200 so über die Dichtungsgeometrie des Luftfiltergehäuses hinaussteht, dass der Deckel 115 des Luftfiltergehäuses nicht mehr schließbar ist. Die Seitenflächen 211 bzw. 212 können ferner mit einer Verstärkung versehen sein, wie durch die gerippte Struktur in Fig. 9 am Filterelement 200 sichtbar ist. Insbesondere kann die Ausbuchtung 243 der Filterelementhaltevorrichtung 240 an der Seite des Filterelementes 200 angeordnet sein, die durch eine entsprechende Verstärkungsstruktur verstärkt ist. Auf diese Weise kann insbesondere über die bereits verstärkte Seite 211 des Filterelementes 200 die entsprechende Haltekraft auf das Filterelement 200 bzw. das Filtermedium 210 aufgebracht werden. Die Dichtung kann dabei sowohl auf einem Kragen der Filterelementhaltevorrichtung 240 aufgebracht sein, jedoch auch an einer Außenkante der Filterelementhaltevorrichtung 240, Insbesondere kann eine Kante der Filterelementhaltevorrichtung mit einer Dichtungsmasse, insbesondere einer elastischen Dichtungsmasse, so umspritzt werden, dass die Dichtungsmasse die Kante als Stoßschutz umgibt. Die Dichtungsmasse kann entlang der Längsseiten 212 des Filtermediums 210 auch unmittelbar auf das Filtermedium aufgebracht werden. Dort sind nicht zwingend weitere Haltegeometrien notwendig, um die Dichtungsmasse aufzunehmen. Die Dichtungsmasse kann unterschiedliche Querschnitte aufweisen. Insbesondere kann der Querschnitt der Dichtungsmasse rechteckförmig, halbkreisförmig, trapezförmig oder halbellipsenförmig oder halbovalförmig sein. Jedoch ist die Querschnittsform der Dichtungsmasse nicht auf die erwähnten Querschnittsformen beschränkt,

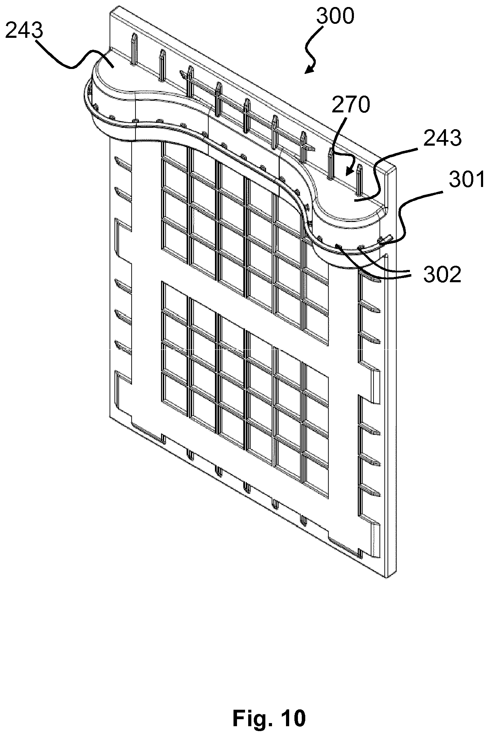

Fig. 10 zeigt eine Verstärkungsstruktur in Form einer Endscheibe 300 eines weiteren Beispiels eines Luftfilterelementes 200 eines Luftfilters 100. Der Luftfilter 100 ist mit dem anhand der Fig. 7 bis 9 beschriebenen Luftfilter 100 weitgehend identisch. Gleiche oder ähnlich Bauteile sind mit denselben Bezugszeichen versehen.

An beiden Filtermediumseitenflächen 211 des Filterelementes 200 ist jeweils eine der in Fig. 10 gezeigten Endscheibe 300 befestigt, beispielsweise durch Verkleben oder Verschweißen der Endscheiben 300 mit dem Filtermedium 210. An den beiden anderen Filtermediumseitenflächen 212 ist keine Verstärkungsstruktur vorgesehen. Im Falle eines zickzackförmig gefalteten Filtermediums 210 dienen die Endscheiben 300 auch zur seitlichen Abdichtung der Faltentaschen. Die einzelne Endscheibe 300 ist vorzugsweise aus (harten) Kunststoff hergestellt, insbesondere als Spitzgussteil.

Als Teil der Filterelementhaltevorrichtung 240 ist an der Endscheibe 300 die Halteanordnung 270 mit zwei Ausbuchtungen 243 vorgesehen. An der Endscheibe 300 gemäß Fig. 10 fehlt noch die Dichtungsanordnung 260. Zur Ausbildung der Dichtungsanordnung 260 wird Dichtungsmasse 263 an die Endscheibe 300 derart angeformt, dass die Dichtungsmasse 263 einen Befestigungssteg 301 umschließt. Der Befestigungssteg 301 ist über eine Vielzahl von Haltestegen 302 mit der Außenfläche der Endscheibe 300 verbunden, Durch die Verkrallung ergibt sich eine besonders feste Anbindung der Dichtungsmasse 263 an die Endscheibe 300. Insbesondere wird die Dichtungsmasse 263 an die Endscheibe 300 angegossenen bzw. angeschäumt. Vorzugsweise dient ein PUR-Material als Dichtungsmasse 263. Insbesondere weist die Endscheibe 300 einen harten Kunststoff und als Dichtungsmasse 263 einen weichen Kunststoff auf. Es ist aber auch denkbar, dass die gesamte Endscheibe 300 mit oder ohne der Dichtungsmasse 263 materialeinheitlich, z. B. aus einem PUR-Material, gegossen bzw. aufgeschäumt ist.

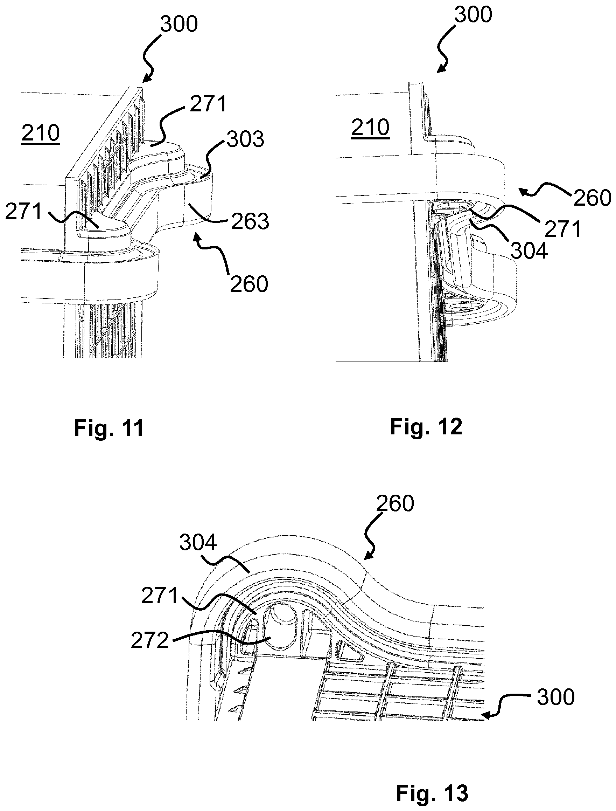

Die Fig. 11 bis 13 zeigen ausschnittsweise das Luftfilterelement 200 mit der Endscheibe 300 aus Fig. 10, wobei in den Fig. 11 bis 13 die Dichtungsmasse 263 bereits angeformt ist. Die Dichtungsmasse 263 bildet eine Dichtungsanordnung 260, welche eine umlaufende, senkrecht zur Längsachse Z des Luftfilterelementes 200 verlaufende Dichtfläche 303 aufweist (Fig. 11). An den Ausbuchtungen 243 ist jeweils eine in Fig. 11 nach oben gewandte Haltfläche 271 vorgesehen. Die Halteflächen 271 sind gegenüber der Dichtfläche 303 axial vor versetzt angeordnet. Beim Aufschäumen des Dichtungsmaterials 263 wird durch diesen Axialversatz vermieden, dass aufgrund einer versehentlichen geringfügigen Überdossierung der Dichtungsmasse 263 diese auf die Haltefläche 271 gelangen kann.

Auf der gegenüberliegenden Seite der Dichtungsanordnung 260 ist eine zweite umlaufende Dichtfläche 304 bzw. Dichtwulst vorgesehen (Fig. 12). An den Ausbuchtungen 243 ist jeweils eine in Fig. 12 nach unten gewandte Haltefläche 271 vorgesehen. Diese Halteflächen 271 sind geringfügig gegenüber über der Dichtfläche 304 axial rückversetzt. Eine Ansicht direkt auf eine dieser Halteflächen 271 ist in Fig. 13 gezeigt, Sie weist neben einer Ausnehmung 272 zur Aufnahme eines gehäuseseitigen Vorsprungs noch weitere Ausnehmungen auf, die lediglich zur Einsparung von Kunststoffmaterial dienen.

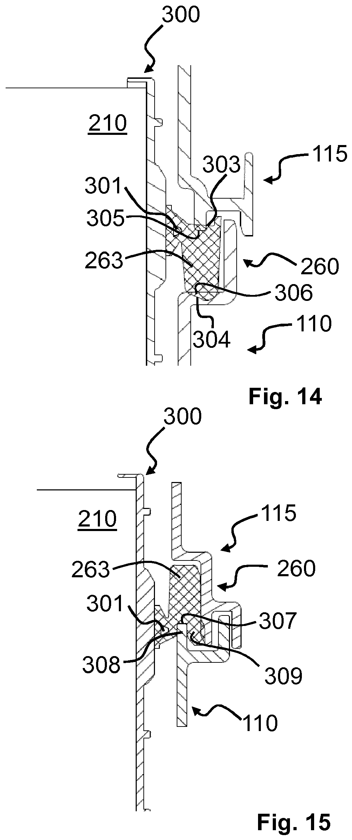

Fig. 14 ist eine ausschnittsweise Schnittansicht des in das Filtergehäuse 100 eingesetzten Filterelements 100 im Bereich der Endscheibenmitte 300. Auf die elementseitige Dichtfläche 303 wird axial eine gehäuseseitige Dichtfläche 305, welche an einem umlaufenden Dichtsteg des Gehäusedeckels 115 ausgebildet ist, gepresst. Auf die elementseitige Dichtfläche 304 wird in entgegengesetzter axialer Richtung eine gehäuseseitige Dichtfläche 306 gepresst, die an einem umlaufenden Absatz des Gehäusekörpers 110 ausgebildet ist. Es handelt sich um eine axiale Dichtungsgeometrie. In Fig. 14 ist die Dichtungsmasse 263 im unverpressten bzw. unverformten Zustand gezeigt. Tatsächlich überlappt die Dichtungsmasse 263 nicht mit den gehäuseseitigen Bauteilen, sondern ist so verformt, dass sie an diesen dicht anliegt, Außerdem ist in Fig. 15 gezeigt, wie die Dichtungsmasse 263 den Befestigungssteg 301 umschließt

Der Gehäusedeckel 115 und der Gehäusekörper 110 sind jeweils mit gehäuseseitigen Halteflächen 171 versehen (in Fig. 14 nicht gezeigt), welche im verbauten Zustand des Filterelementes 200 an den elementseitigen Halteflächen 271 (auf der Oberseite und Unterseite der Ausbuchtungen 243) anliegen. Es ergibt sich auf diese Weise eine feste Halterung des Filterelements 200 im Filtergehäuse 100 über die Ausbuchtungen 243 zumindest in beide axiale Richtungen. Vorzugsweise verlaufen die gehäuseseitige Dichtfläche 306 und die in dieselbe Richtung gewandten (nach oben) gehäuseseitigen Halteflächen 171 des Gehäusekörpers 110 auf gleicher axialer Höhe. Fertigungstechnische Toleranzfehler der axialen Relativlage dieser Flächen werden vermieden.

Fig. 15 zeigt eine der Fig. 14 entsprechende Schnittdarstellung eines weiteren Beispiels eines Luftfilters 100 bzw. Luftfilterelements 200 mit einer etwas abgewandelten Dichtungsgeometrie. Im Übrigen entspricht der Luftfilter 100 den vorstehend beschriebenen Beispielen. Die den Befestigungssteg 301 umschließende Dichtungsmasse 263 weist eine abgewandelte Form auf. Sie weist eine umlaufende Nut 307. In diese Nut 307 greift im verbauten Zustand ein gehäuseseitiger Dichtsteg 308 ein. Nut 307 und Dichtsteg 308 sind derart bemessen, dass die Außenfläche der äußeren Nutwand 309 radial nach außen an eine Gehäuseinnenwand gepresst wird. Es ergibt sich eine radiale Dichtung. Zusätzlich kann die Dichtungsmasse 263 auch axial an der Seite, welche der Nut 307 gegenüberliegt, an einer Gehäusefläche anliegen, um die Dichtung zu stabilisieren, oder sogar um eine zusätzliche axial Abdichtung zu bewirken.

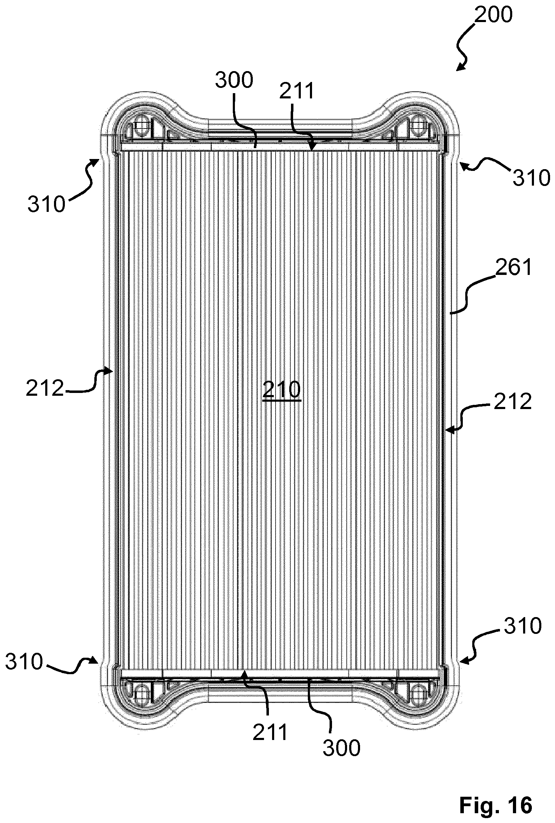

Ein weiteres Beispiel eine Luftfilterelements 100 ist der Fig. 16 in einer Aufsicht zu entnehmen. Das Filterelement 200 kann weitgehend identisch mit den zuvor beschriebenen Filterelementen 200 ausgebildet sein. Es weist zwei Endscheiben 300 auf, die mit den Filtermediumseitenflächen 211 verbunden sind. Beispielhaft ist gezeigt, dass die Dichtungslinie 261 jeweils beim Übergang von einer Filtermediumseitenfläche 212 auf die schmale Außenkantenfläche der Endscheibe 300 eine Abkröpfung 310 durchläuft. Um ein funktionssicheres Anbinden des Filtermediums 210 an die <Endscheiben 300 zu gewährleisten, müssen diese seitlich etwas gegenüber dem Filtermedium 210 überstehen. Dank der Abkröpfungen 310 kann das Filterelement 200 trotz der seitlich überstehenden Endscheiben 300 bei gleichem für Filtermedium zur Verfügung stehendem Volumen noch etwas kleiner bauend ausgebildet werden,

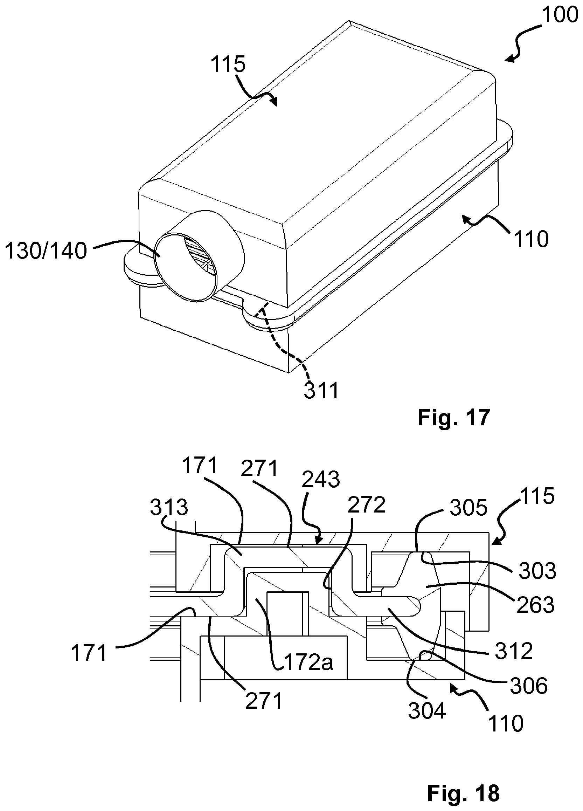

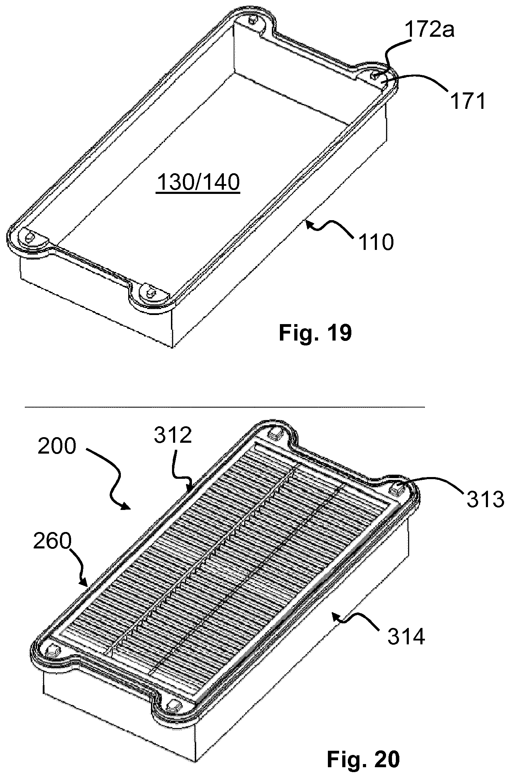

Ein weiteres Beispiel eines Luftfilters 100 wird anhand der Fig. 17 bis 20 beschrieben. Fig. 17 zeigt den Luftfilter im betriebsbereiten Zustand. Das Filtergehäuse 105 weist einen abnehmbaren Gehäusedeckel 115 und einen Gehäusekörper 110 auf. Der Gehäusedeckel ist mit einer seitlicher Abströmöffnung 130 bzw. Anströmöffnung 140 versehen. Der Gehäusekörper 110 weist dementsprechende eine Anströmöffnung 140 bzw. Abströmöffnung 130 auf (Fig. 19).

Fig. 18 ist eine ausschnittweise Schnittdarstellung entlang der in Fig. 17 mittels der gestrichelten Linie 311 angedeuteten Ebene zu entnehmen. Die Dichtungsmasse 263 ist an einen umlaufenden Rand 312 des Filterelementes 200 angeformt Die umlaufenden Dichtflächen 303 und 304 der Dichtungsmasse 263 liegend dichtend an umlaufenden gehäuseseitigen Dichtflächen 305 und 306 an. Der Rand 312 bildet die Ausbuchtungen 243 aus. Die in Fig. 18 nach unten gewandten Halteflächen 271 an den Ausbuchtungen 243 liegen an korrespondierenden Halteflächen 171 an dem Gehäusekörper 110 an. Die in Fig. 18 nach oben gewandten Halteflächen 271 weisen eine geringfügen Abstand zur korrespondierenden gehäuseseitigen Haltefläche 171 auf. Sie können aber auch so ausgelegt werden, dass sie ebenfalls zur Anlage gelangen. Durch einen hohlen Vorsprung 313 ist eine Ausnehmung 272 an der Unterseite der Ausbuchtungen 243 gebildet, in welche ein gehäuseseitiger Vorsprung 172a eingreift. Um Material zu sparen, ist der Vorsprung 172a ebenfalls hohl,

Fig. 20 zeigt das Filterelement 200 mit dem umlaufenden Rand 312, welcher mit der umlaufenden Dichtungsanordnung 260, den Ausbuchtungen 243 und den hohlen Vorsprüngen 313 versehen ist. Beispielhaft stellt das Filterelement 200 auch eine Variante eines Filterelements 200 dar, dass einen umlaufenden Rahmen 314 aufweist. Teil des Rahmens 314 ist der umlaufende Rand 312. Er dient aber auch zur seitlichen Abdichtung und Stabilisierung des Filtermediums 210. Vorzugsweise ist der umlaufende Rahmen aus Kunststoff und mittels eines Spitzgussverfahrens an das Filtermedium 210 angespritzt. Es handelt sich folglich um ein kunststoffumspritztes Filterelement 200. Die Dichtungslinie 261 der Dichtungsanordnung 260 verläuft entsprechend der Dichtungslinie 261 des anhand Fig. 7 beschriebenen Filterelements 200.

Zwei Beispiele für Filterelemente 200 mit einem abgewandelten Verlauf der Dichtungslinie 261 sind in den Fig. 21 und 22 gezeigt. Bei den gezeigten Filterelementen 200 handelt es sich auch um kunststoffumspritzte Filterelemente 200. Ein entsprechender Dichtungsverlauf kann aber auch bei Filterelementen 200 mit zwei gegenüberliegenden Endscheiben 300 oder anders aufgebauten Filterelementen 200 realisiert werden.

In Fig. 21 stehen die Ausbuchtungen 243 im Gegensatz zu den zuvor beschriebenen Elementen 200 nicht nur gegenüber einer Filtermediumseitenfläche 211, 212, sondern gegenüber beiden Filtermediumseitenflächen 211, 212, insbesondere um das gleiche Maß. Im Bereich einer Ausbuchtung 243 verläuft die Dichtungslinie 261 zunächst entlang eines von dem Filtermedium 210 radial weggekrümmten Abschnitts, dann entlang eines radial zugekrümmten Abschnitts und schließlich wieder entlang eines radial weggekrümmten Abschnitts.

Fig. 22 zeigt ein Beispiel eines Filterelementes 200, welches zumindest aufgrund der Ausbildung der Ausbuchtungen 243 nicht spiegelsymmetrisch aufgebaut ist. Dank dieser Maßnahme kann das Filterelement 200 nur gemäß einer einzigen vorgegebenen Lage im Filtergehäuse 105 eingebaut werden, Generell kann eine eineindeutige Einbaulage eines Filterelementes 200 durch Formgebung (z. B. Krümmungsradius, radiale Auskragung usw.) und/oder Anzahl und/oder Position der Ausbuchtungen 243 definiert werden.

Generell kann es auch vorteilhaft sein, die Ausbuchtungen 243 bzw. die gesamte Halteanordnung 260 bzw, die gesamte Filterelementhaltevorrichtung 240 aus einem Polymerschaum, insbesondere einem PUR-Schaum, herzustellen.

Es sollte angemerkt werden, dass die vorliegende Erfindung neben Luftfiltern auch bei Flüssigkeitsfiltern eingesetzt werden kann.

Es sei angemerkt, dass der Begriff "umfassend" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Luftfilterelement zum Einsetzen in ein Luftfiltergehäuse (100), wobei das Luftfilterelement (200) aufweist: eine Anströmfläche (275), eine Abströmfläche (285), ein Filtermedium (210), eine Filterelementhaltevorrichtung (240), wobei sich das Filtermedium zwischen der Anströmfläche und der Abströmfläche in eine axiale Richtung (A) des Luftfilterelementes erstreckt, wobei die Filterelementhaltevorrichtung mit dem Filtermedium verbunden ist, wobei die Filterelementhaltevorrichtung (240) eine von dem Filtermedium radial abstehende Halteanordnung (270) und eine Dichtungsanordnung (260) mit einer um das Filtermedium (210) umlaufenden Dichtungslinie (261) aufweist, wobei sich die radial abstehende Halteanordnung (270) zwischen der umlaufenden Dichtungslinie (261) und dem Filtermedium (210) befindet, **dadurch gekennzeichnet, dass** die Halteanordnung (270) an einander axial gegenüberliegenden Seiten jeweils eine zwischen der Dichtungslinie (261) und dem Filtermedium (210) angeordnete Haltefläche (271) aufweist, mit denen das Filterelement in beiden axialen Richtungen haltbar ist, und eine radial abstehende Ausbuchtung (243), insbesondere mehrere radial abstehende Ausbuchtungen (243), aufweist, wobei der Verlauf der Dichtungslinie (261) abschnittsweise von dem Filtermedium (210) radial weggekrümmt ist und wobei die Dichtungsanordnung (260) ein entlang der Dichtungslinie (261) auf die Filterelementhaltevorrichtung (240) aufgebrachtes elastisches Dichtungsmaterial (263) aufweist und wobei die Halteanordnung (270) wenigstens eine Ausnehmung (272) in axialer Richtung aufweist (A), wobei die Ausnehmung ausgelegt ist einen luftfiltergehäuseseitigen Vorsprung (172) aufzunehmen.

2. Luftfilterelement gemäß Anspruch 1, wobei die Dichtungslinie (261) auf dem Dichtungsmaterial (263) liegt.

3. Luftfilterelement gemäß einem der Ansprüche 1 und 2, wobei die Dichtungsanordnung (260) ausgelegt ist für eine Einbringung des Luftfilterelementes (200) in ein Luftfiltergehäuse (100) entlang einer axialen Richtung (A).

4. Luftfilterelement gemäß einen der vorhergehenden Ansprüche, wobei die Haltefläche (271) insbesondere gegenüber einer in dieselbe Richtung gewandten Dichtfläche (303, 304), die von der Dichtungsanordnung (260) gebildet ist, axial versetzt angeordnet ist.

5. Luftfilterelement gemäß einem der Ansprüche 1 bis 4, wobei die Ausnehmung (272) eine Langlochausnehmung ist, wobei sich insbesondere der Querschnitt der Ausnehmung (272) in axiale Richtung (A) vorzugsweise wenigstens teilweise verringert.

6. Luftfilterelement gemäß Anspruch 5, wobei die zwischen der umlaufenden Dichtungslinie (261) und dem Filtermedium (210) angeordneten Ausnehmungen (272) geschlossene Ausnehmungen sind.

7. Luftfilterelement gemäß einem der Ansprüche 1 bis 6, wobei die Halteanordnung (270) eine Mehrzahl von Ausnehmungen (272) in axialer Richtung (A) aufweist, wobei die Mehrzahl von Ausnehmungen (272) bezogen auf eine Mittelachse (Z) des Luftfilterelementes (200) eine Winkelteilung aufweist, die eine eindeutige Einbaulage des Luftfilterelementes in einem Luftfiltergehäuse definiert.

8. Luftfilterelement gemäß einem der Ansprüche 1 bis 7, wobei das Filtermedium (210) zwischen der Anströmfläche (275) und der Abströmfläche (285) wenigstens eine Kante (213) aufweist, an der eine erste Filtermediumseitenfläche (211) und eine zweite Filtermediumseitenfläche (212) aneinandergrenzen, wobei die Filterelementhaltevorrichtung (240) an der Kante eine radiale Ausbuchtung (243) aufweist, wobei die Dichtungsanordnung (260) eine um das Filtermedium (210) umlaufende Dichtungslinie (261) aufweist, wobei die Dichtungslinie entlang der radialen Ausbuchtung verläuft, wobei vorzugsweise der Radius (R2) entlang des Verlaufs der Dichtungslinie größer ist als der Radius (R1) der Kante.

9. Luftfilterelement gemäß Anspruch 8, wobei sich die radiale Ausbuchtung (243) im Wesentlichen nur über eine der Außenkanten (241, 242) der Filterelementhaltevorrichtung (240) erstreckt.

10. Luftfilter mit einem Luftfilterelement (200) gemäß einem der Ansprüche 1 bis 9 und einem Luftfiltergehäuse, das ausgelegt ist das Filterelement aufzunehmen, wobei das Luftfiltergehäuse aufweist: eine Anströmöffnung (130), eine Abströmöffnung (140), eine Filterelementaufnahme (170), wobei sich die Filterelementaufnahme zwischen der Anströmöffnung und der Abströmöffnung befindet, wobei die Filterelementaufnahme (170) eine Haltefläche (171) und eine Dichtungsanordnung (160) mit einer um das Luftfiltergehäuse umlaufenden Dichtungslinie (161) aufweist, wobei die Haltefläche zwischen der umlaufenden Dichtungslinie (261) und dem einzusetzenden Filterelement (200) angeordnet ist.

11. Luftfilter gemäß Anspruch 10, wobei die Haltefläche (171) der Filterelementaufnahme (170) und eine Dichtfläche der Filterelementaufnahme (170) zumindest weitgehend auf gleicher axialer Höhe angeordnet sind.

12. Luftfilter gemäß einem der Ansprüche 10 und 11, wobei die Filterelementaufnahme (170) eine von einem einzusetzenden Filterelement radial weggerichtete Ausbuchtung (143) aufweist, wobei die Dichtungslinie in der Ausbuchtung verläuft, wobei der Radius entlang des Verlaufs der Dichtungslinie (161) größer ist als der Radius einer an der Ausbuchtung befindlichen Gehäuseinnenkante des Luftfiltergehäuses (105).

13. Luftfilter gemäß einem der Ansprüche 10 bis 12, wobei der Verlauf der Dichtungslinie (161) abschnittsweise von dem einzusetzenden Filterelement (200) radial weggekrümmt ist.

14. Luftfilter gemäß einem der Ansprüche 10 bis 13 wobei die Filterelementaufnahme (170) wenigstens einen Vorsprung (172) in axialer Richtung (A) des Filterelementes (200) aufweist, wobei der Vorsprung ausgelegt ist in eine filterelementseitige Ausnehmung (272) einzugreifen.

## Claims

1. Air filter element for insertion into an air filter housing (100), wherein the air filter element (200) features: an inflow surface (275), an outflow surface (285), a filter medium (210), a filter element holding apparatus (240), wherein the filter medium extends between the inflow surface and the outflow surface in an axial direction (A) of the air filter element, wherein the filter element holding apparatus is connected to the filter medium, wherein the filter element holding apparatus (240) features a holding arrangement (270) projecting radially from the filter medium and a seal arrangement (260) having a sealing line (261) extending around the filter medium (210), wherein the radially projecting holding arrangement (270) is located between the circumferentially extending sealing line (261) and the filter medium (210), **characterized in that** the holding arrangement (270) features on axially opposing sides each a holding surface (271) disposed between the sealing line (261) and the filter medium (210) and with which the filter element can be held in both axial directions, and a radially projecting bulge (243), in particular a plurality of radially projecting bulges (243), wherein the sealing line (261) is sectionwise radially curved away from the filter medium (210), and wherein the seal arrangement (260) features an elastic sealing compound (263) applied along the sealing line (261) to the filter element holding apparatus (240), and wherein the holding arrangement (270) features at least one recess (272) in axial direction (A), wherein the recess is designed to receive a projection (172) on the air filter housing side.

2. Air filter element according to claim 1, wherein the sealing line (261) lies on the sealing compound (263).

3. Air filter element according to one of the claims 1 and 2, wherein the seal arrangement (260) is designed for introducing the air filter element (200) into an air filter housing (100) along an axial direction (A).

4. Air filter element according to one of the previous claims, wherein the holding surface (271) is disposed axially offset in particular with respect to a sealing surface (303, 304) facing in the same direction and formed by the seal arrangement (260).

5. Air filter element according to one of the claims 1 to 4, wherein the recess (272) is an elongated hole recess, wherein in particular the cross-section of the recess (272) is preferably at least partially reduced in the axial direction (A).

6. Air filter element according to claim 5, wherein the recesses (272) disposed between the circumferential sealing line (261) and the filter medium (210) are closed recesses.

7. Air filter element according to one of the claims 1 to 6, wherein the holding arrangement (270) features a plurality of recesses (272) in axial direction (A), wherein the plurality of recesses (272) features an angular pitch relative to a central axis (Z) of the air filter element (200), said angular pitch defining a unique installation position of the air filter element in an air filter housing.

8. Air filter element according to one of the claims 1 to 7, wherein the filter medium (210) features at least one edge (213) between the inflow surface (275) and the outflow surface (285) at which a first filter medium lateral face (211) and a second filter medium lateral face (212) adjoin each other, wherein the filter element holding apparatus (240) features a radial bulge (243) at the edge, wherein the seal arrangement (260) features a sealing line (261) extending around the filter medium (210), wherein the sealing line extends along the radial bulge, wherein preferably the radius (R2) along the course of the sealing line is larger than the radius (R1) of the edge.

9. Air filter element according to claim 8, wherein the radial bulge (243) extends substantially only over one of the outer edges (241, 242) of the filter element holding apparatus (240).

10. Air filter having an air filter element (200) according to one of the claims 1 to 9 and an air filter housing designed to receive the filter element, wherein the air filter housing comprises: an inflow opening (130), an outflow opening (140), a filter element receptacle (170), wherein the filter element receptacle is located between the inflow opening and the outflow opening, wherein the filter element receptacle (170) features a holding surface (171) and a seal arrangement (160) with a sealing line (161) extending around the air filter housing, wherein the holding surface is disposed between the circumferential sealing line (261) and the filter element (200) to be inserted.

11. Air filter according to claim 10, wherein the holding surface (171) of the filter element receptacle (170) and a sealing surface of the filter element receptacle (170) are at least disposed to a large extent at the same axial height.

12. Air filter according to one of the claims 10 and 11, wherein the filter element receptacle (170) features a bulge (143) directed radially away from a filter element to be inserted, wherein the sealing line extends in the bulge, wherein the radius along the course of the sealing line (161) is greater than the radius of a housing inner edge of the air filter housing (105) located on the bulge.

13. Air filter according to one of the claims 10 to 12, wherein the course of the sealing line (161) is sectionwise curving radially away from the filter element (200) to be inserted.

14. Air filter according to one of the claims 10 to 13, wherein the filter element receptacle (170) features at least one projection (172) in the axial direction (A) of the filter element (200), wherein the projection is designed to engage in a recess (272) on the filter element side.

## Revendications

1. Élément de filtre à air à insérer dans un boîtier de filtre à air (100), dans lequel l'élément de filtre à air (200) présente : une surface d'afflux (275), une surface d'écoulement (285), un milieu filtrant (210), un dispositif de maintien pour élément filtrant (240), dans lequel le milieu filtrant s'étend entre la surface d'afflux et la surface d'écoulement dans un sens axial (A) de l'élément de filtre à air, dans lequel le dispositif de maintien pour élément filtrant est relié au milieu filtrant, dans lequel le dispositif de maintien pour élément filtrant (240) présente une structure de maintien (270) faisant saillie radialement à partir du milieu filtrant et une structure d'étanchéité (260) ayant une ligne d'étanchéité (261) s'étendant autour du milieu filtrant (210), dans lequel la structure de maintien (270) faisant saillie radialement est située entre la ligne d'étanchéité périphérique (261) et le milieu filtrant (210), **caractérisé en ce que** la structure de maintien (270) présente sur chacun des côtés axialement opposés une surface de retenue (271) disposée entre la ligne d'étanchéité (261) et le milieu filtrant (210), et avec lesquelles l'élément filtrant peut être maintenu dans les deux sens axiaux, et présente un renflement (243) dépassant radialement, notamment plusieurs renflements (243) dépassant radialement, dans lequel la ligne d'étanchéité (261) s'écarte de manière courbe en sens radial, dans certaines sections, du milieu filtrant (210) et dans lequel la structure d'étanchéité (260) présente un matériau d'étanchéité élastique (263) appliqué le long de la ligne d'étanchéité (261) au dispositif de maintien pour élément filtrant (240), et dans lequel la structure de maintien (270) présente au moins un évidement (272) dans le sens axial (A), dans lequel l'évidement est conçu pour recevoir une saillie (172) côté boîtier de filtre à air.

2. Élément de filtre à air selon la revendication 1, dans lequel la ligne d'étanchéité (261) repose sur le matériau d'étanchéité (263).

3. Élément de filtre à air selon l'une des revendications 1 et 2, dans lequel la structure d'étanchéité (260) est conçue pour insérer l'élément de filtre à air (200) dans un boîtier de filtre à air (100) le long d'un sens axial (A).

4. Élément de filtre à air selon l'une des revendications précédentes, dans lequel la surface de retenue (271) est décalée axialement, notamment par rapport à une surface d'étanchéité (303, 304) tournée dans la même direction et formée par la structure d'étanchéité (260).

5. Élément de filtre à air selon l'une des revendications 1 à 4, dans lequel l'évidement (272) est un évidement à trou oblong, dans lequel notamment la section transversale de l'évidement (272) est de préférence au moins partiellement réduite dans la direction axiale (A).

6. Élément de filtre à air selon la revendication 5, dans lequel les évidements (272) disposés entre la ligne d'étanchéité périphérique (261) et le milieu filtrant (210) sont des évidements fermés.

7. Élément de filtre à air selon l'une des revendications 1 à 6, dans lequel la structure de maintien (270) présente une pluralité d'évidements (272) dans un sens axial (A), dans lequel la pluralité d'évidements (272) présente un pas angulaire par rapport à un axe médian (Z) de l'élément de filtre à air (200), lequel pas angulaire définit une position unique de montage de l'élément de filtre à air dans un boîtier de filtre à air.

8. Élément de filtre à air selon l'une des revendications 1 à 7, dans lequel le milieu filtrant (210) présente au moins un bord (213) entre la surface d'afflux (275) et la surface d'écoulement (285) auquel une première surface latérale de milieu filtrant (211) et une seconde surface latérale de milieu filtrant (212) sont adjacentes, dans lequel le dispositif de maintien pour élément filtrant (240) présente un renflement radial (243) au niveau du bord, dans lequel la structure d'étanchéité (260) présente une ligne d'étanchéité (261) entourant le milieu filtrant (210), dans lequel la ligne d'étanchéité s'étend le long du renflement radial, dans lequel de préférence le rayon (R2) sur le trajet de la ligne d'étanchéité est supérieur au rayon (R1) du bord.

9. Élément de filtre à air selon la revendication 8, dans lequel le renflement radial (243) ne s'étend sensiblement que sur l'un des bords extérieurs (241, 242) du dispositif de maintien pour élément filtrant (240).

10. Filtre à air ayant un élément de filtre à air (200) selon l'une des revendications 1 à 9 et un boîtier de filtre à air conçu pour réceptionner l'élément filtrant, dans lequel le boîtier de filtre à air présente : une ouverture d'afflux (130), une ouverture d'évacuation (140), un logement pour élément filtrant (170), dans lequel le logement pour élément filtrant est situé entre l'ouverture d'afflux et l'ouverture d'évacuation, dans lequel le logement pour élément filtrant (170) présente une surface de retenue (171) et une structure d'étanchéité (160) avec une ligne d'étanchéité (161) évoluant autour du boîtier de filtre à air, dans lequel la surface de retenue est disposée entre la ligne d'étanchéité périphérique (161) et l'élément filtrant (200) à insérer.

11. Filtre à air selon la revendication 10, dans lequel la surface de retenue (171) du logement pour élément filtrant (170) et une surface d'étanchéité du logement pour élément filtrant (170) sont disposées au moins sensiblement à la même hauteur axiale.

12. Filtre à air selon l'une des revendications 10 et 11, dans lequel le logement pour élément filtrant (170) présente un renflement (143) s'écartant en sens radial d'un élément filtrant à insérer, dans lequel la ligne d'étanchéité évolue dans le renflement, dans lequel le rayon le long de la ligne d'étanchéité (161) est plus grand que le rayon d'un bord intérieur du boîtier de filtre à air (105) situé sur le renflement.

13. Filtre à air selon l'une des revendications 10 à 12, dans lequel la ligne d'étanchéité (161) s'écarte de manière courbe en sens radial, dans certaines sections, de l'élément filtrant (200) à insérer.

14. Filtre à air selon l'une des revendications 10 à 13, dans lequel le logement pour élément filtrant (170) présente au moins une saillie (172) en sens axial (A) de l'élément filtrant (200), dans lequel la saillie est conçue pour se mettre en prise dans un évidement (272) côté de l'élément filtrant.
